# EUROPEAN PATENT SPECIFICATION

(11) **EP 0 803 385 B1**
(45) Date of publication and mention of the grant of the patent: **13.08.2008**
(21) Application number: 97106842.4
(22) Date of filing: 24.04.1997
(51) Int. Cl.: B60G 17/015

(54) **Suspension Apparatus**
Aufhängungseinrichtung
Dispositif de suspension

(30) Priority: 25.04.1996 JP 13107796
(43) Date of publication of application: 29.10.1997
(73) Proprietor: Toyota Jidosha Kabushiki Kaisha, Toyota-shi, Aichi-ken (JP)
(72) Inventor: Sato, Atsushi, Toyota-shi, Aichi (JP); Shono, Shoichi, Toyota-shi, Aichi (JP); Tabata, Masaaki, Toyota-shi, Aichi (JP); Ogawa, Kazuo, Toyota-shi, Aichi (JP)
(74) Representative: TBK-Patent

(56) References cited:
- EP-A- 0 297 736
- EP-A- 0 791 492
- WO-A-94/00307
- PATENT ABSTRACTS OF JAPAN vol. 011, no. 344 (M-640), 11 November 1987 (1987-11-11) & JP 62 122810 A (SHOWA MFG CO LTD), 4 June 1987 (1987-06-04)
- PATENT ABSTRACTS OF JAPAN vol. 010, no. 062 (M-460), 12 March 1986 (1986-03-12) & JP 60 209311 A (KAYABA KOGYO KK), 21 October 1985 (1985-10-21)
- PATENT ABSTRACTS OF JAPAN vol. 014, no. 556 (M-1057), 11 December 1990 (1990-12-11) & JP 02 237811 A (MITSUBISHI MOTORS CORP;OTHERS: 01), 20 September 1990 (1990-09-20)

## Description

### BACKGROUND OF THE INVENTION

### 1. Field of the Invention

The present invention relates to a suspension apparatus for controlling feed and discharge of a working fluid to and from actuators interposed between a vehicle body and respective wheels, so as to adjust the vehicle height according to the preambles of claims 1, 6 or 7 and a corresponding method according to the preamble of claim 10.

### 2. Description of the Prior Art

Such suspension apparatuses, which feed and discharge a working fluid to and from actuators in order to adjust the vehicle height, have functions discussed below. By way of example, when the vehicle reaches a high-speed driving condition of 80 km/h or faster, the suspension apparatus lowers the vehicle height from a standard level in an ordinary-speed driving condition, in order to ensure the driving stability. The suspension apparatus works to keep the vehicle height at a fixed level, irrespective of a variation in number of passengers or weight of loading. The suspension apparatus can also lower the vehicle height from a standard level in a driving condition, in order to enable a driver and other passengers to easily ride on or get off the vehicle. The suspension apparatus may be provided with a switch that is used to change the vehicle height between a high level and a low level arbitrarily. The vehicle height can be lowered or raised according to the requirement specified through an operation of the switch. In any of these cases, a control valve is driven and regulated to make the vehicle height at the moment (hereinafter referred to as the current vehicle height) coincide with a target vehicle height.

A proposed technique enables the vehicle height to be adjusted separately at the front wheels and at the rear wheels and assures a forward-leaning attitude, wherein the vehicle height at the front wheels is lower than that at the rear wheels, while the vehicle runs (JAPANESE PATENT LAYING-OPEN GAZETTE No. 2-237811). Such a forward-leading attitude improves the aerodynamic properties of the vehicle and ensures the stability under the high-speed driving condition.

Irrespective of these advantages, the conventional suspension apparatuses still have some drawbacks as discussed below.

In the course of adjusting the vehicle height, for example, lowering the vehicle height, to assure the forward-leaning attitude of the vehicle, the vehicle height at the front wheels may temporarily become higher than the vehicle height at the rear wheels. When this happens during a night drive, the head lamps arranged on the side of the front wheels having the higher vehicle height turn upward and may blind the driver in a vehicle running in the opposite direction.

Another proposed technique carries out a decrease in vehicle height at the front wheels prior to a decrease in vehicle height at the rear wheels and alternately implements the decrease in vehicle height at the front wheels and at the rear wheels in a stepwise manner. The procedure of alternately lowering the vehicle height at the front wheels and at the rear wheels effectively prevents the head lamps from turning upward and blinding the driver in a vehicle running in the opposite direction. This proposed technique, however, has the following drawback. In this structure, while a decrease in vehicle height is carried out on one side (for example, at the front wheels), a decrease in vehicle height is in wait on the other side (for example, at the rear wheels). Such a waiting state is repeated alternately at the front wheels and at the rear wheels. This makes the required time period for completing the decrease in vehicle height undesirably long.

A suspension apparatus according to the state of the art is disclosed in WO-A94/00307 comprises actuators for respective wheels and for changing a vehicle height through supply and discharge of a working fluid. Furthermore, control means is provided for controlling the supply and the discharge of the working fluid. The control means enables the working fluid to be discharged from said actuators for front wheels so as to lower a front-wheel vehicle height at a first descending rate, while enables the working fluid to be discharged from said actuators for rear wheels so as to lower a rear-wheel vehicle height at a second descending rate.

According to a state of the art disclosed in JP-A-62 122810, comprises actuators for respective wheels and for changing a vehicle height through supply and discharge of a working fluid. Furthermore, control means is provided for controlling the supply and the discharge of the working fluid to and from front wheel actuators and rear wheel actuators. The control means comprises rear-wheel discharge means for starting and then continuing discharge of the working fluid from said actuators for said left and right rear wheels to lower the vehicle height, while said front-wheel discharge means continues the discharge of the working fluid from said actuators for said left and right front wheels

A known suspension apparatus according to EP-A-297736 comprises a leveling device with a level sensor on each side of the vehicle. A leveling action is initiated when a level sensor indicates a height out of a range in the vicinity of a calibrated level for the level sensor.

Furthermore, JP-A-60 209311 discloses a hydropneumatic suspension for performing a vehicle height control. This suspension according to the state of the art includes choke valves for controlling the suspension control in accordance with the requirements of the vehicle suspension.

### SUMMARY OF THE INVENTION

The object of the present invention is to prevent the head lamps from turning upward and blinding the driver in a vehicle running in the opposite direction in the course of lowering the vehicle height and, at the same time, shorten the required time period for completing the decrease in vehicle height.

The object is solved by a suspension apparatus having the features of claims 1, 6 or 7 and by a method having the features of claim 10. Further developments are defined in the dependent claims.

At least part of the above and the other related objects is realized by a first suspension apparatus for a vehicle, which includes: actuators for respective wheels interposed between a vehicle body and the respective wheels for suspending the vehicle body and changing a vehicle height through supply and discharge of a working fluid; and control means for controlling the supply and discharge of the working fluid to and from the actuators for the respective wheels, thereby adjusting the vehicle height, the control means enabling the working fluid to be discharged from the actuators for left and right front wheels so as to lower a front-wheel vehicle height at the left and right front wheels at a first descending rate, while enabling the working fluid to be discharged from the actuators for left and right rear wheels so as to lower a rear-wheel vehicle height at the left and right rear wheels at a second descending rate that is less than the first descending rate.

In the first suspension apparatus of the present invention, the first descending rate, at which the working fluid is discharged from the actuators for the left and right front wheels so as to lower the front-wheel vehicle height, is greater than the second descending rate, at which the working fluid is discharged from the actuators for the left and right rear wheels so as to lower the rear-wheel vehicle height. Namely the vehicle height at the front wheels is lowered faster than the vehicle height at the rear wheels. The structure of the first suspension apparatus prevents the vehicle height at the front wheels from being higher than the vehicle height at the rear wheels and thereby prevents the head lamps from turning upward and blinding the driver in a vehicle running in the opposite direction in the course of lowering the vehicle height. Even when the decrease in vehicle height at the front wheels and the decrease in vehicle height at the rear wheels are carried out alternately in a stepwise manner, the greater rate of lowering the vehicle height at the front wheels shortens the waiting time at the rear wheels, thereby desirably shortening the required time period for completing the decrease in vehicle height.

In accordance with one preferable application, the first suspension apparatus further includes: a first conduit which the working fluid discharged from the actuators for the left and right front wheels passes through; and a second conduit which the working fluid discharged from the actuators for the left and right rear wheels passes through, wherein the first conduit has a smaller flow resistance than that of the second conduit, so as to make the first descending rate at the left and right front wheels greater than the second descending rate at the left and right rear wheels.

In the first suspension apparatus of this preferable structure, the first conduit, which the working fluid discharged from the actuators for the left and right front wheels (hereinafter may be referred to as the front-wheel actuators) passes through, has a smaller flow resistance than that of the second conduit, which the working fluid discharged from the actuators for the left and right rear wheels (hereinafter may be referred to as the rear-wheel actuators) passes through. This makes the flow rate of the working fluid through the first conduit higher than the flow rate of the working fluid through the second conduit. The working fluid is accordingly discharged from the front-wheel actuators at a greater rate than that from the rear-wheel actuators, so that the vehicle height at the front wheels is lowered faster than the vehicle height at the rear wheels. The first suspension apparatus of this preferable structure thus effectively prevents the head lamps from turning upward and blinding the driver in a vehicle running in the opposite direction in the course of lowering the vehicle height. The greater rate of lowering the vehicle height at the front wheels shortens the required time period for completing the decrease in vehicle height. These effects are attained by simply adjusting the flow resistance in the flow paths. The existing vehicle can thus be changed to have a structure that enables both the prevention of blinding and the quick decrease in vehicle height by simile modification of the flow paths.

The present invention is also directed to a second suspension apparatus, which includes actuators for respective wheels interposed between a vehicle body and the respective wheels for suspending the vehicle body and changing a vehicle height through supply and discharge of a working fluid, and controls the supply and discharge of the working fluid to and from the actuators for the respective wheels, thereby adjusting the vehicle height. The second suspension apparatus further includes: front-wheel control means for controlling supply and discharge of the working fluid to and from the actuators for left and right front wheels; and rear-wheel control means for controlling supply and discharge of the working fluid to and from the actuators for left and right rear wheels. The front-wheel control means is provided with front-wheel working-fluid discharge means for causing the working fluid to be discharged from the actuators for the left and right front wheels and thereby lowering a front-wheel vehicle height at the left and right front wheels at a first descending rate. The rear-wheel control means has rear-wheel working-fluid discharge means for causing the working fluid to be discharged from the actuators for the left and right rear wheels and thereby lowering a rear-wheel vehicle height at the left and right rear wheels at a second descending rate that is less than the first descending rate.

In the second suspension apparatus of the present invention, the first descending rate, at which the working fluid is discharged from the actuators for the left and right front wheels so as to lower the front-wheel vehicle height, is greater than the second descending rate, at which the working fluid is discharged from the actuators for the left and right rear wheels so as to lower the rear-wheel vehicle height. Namely the vehicle height at the front wheels is lowered faster than the vehicle height at the rear wheels. The structure of the second suspension apparatus also prevents the vehicle height at the front wheels from being higher than the vehicle height at the rear wheels and thereby prevents the head lamps from turning upward and blinding the driver in a vehicle running in the opposite direction in the course of lowering the vehicle height. The greater rate of lowering the vehicle height at the front wheels shortens the waiting time at the rear wheels, thereby desirably shortening the required time period for completing the decrease in vehicle height.

In accordance with a first preferable application of the second suspension apparatus, the front-wheel working-fluid discharge means causes the working fluid to be discharged from the actuators for the left and right front wheels and pass through a front-wheel conduit having a first flow resistance, thereby lowering the front-wheel vehicle height at the first descending rate. The rear-wheel working-fluid discharge means causes the working fluid to be discharged from the actuators for the left and right rear wheels and pass through a rear-wheel conduit having a second flow resistance, which is greater than the first flow resistance of the front-wheel conduit, thereby lowering the rear-wheel vehicle height at the second descending rate.

In the second suspension apparatus of the first preferable application, the rear-wheel conduit has a greater flow resistance than that of the front-wheel conduit. The working fluid is accordingly discharged from the front-wheel actuators at a greater rate than that from the rear-wheel actuators, so that the vehicle height at the front wheels is lowered faster than the vehicle height at the rear wheels. The second suspension apparatus of this preferable structure thus effectively prevents the head lamps from turning upward and blinding the driver in a vehicle running in the opposite direction in the course of lowering the vehicle height. The greater rate of lowering the vehicle height at the front wheels shortens the required time period for completing the decrease in vehicle height. These effects are attained by simply adjusting the flow resistance in the flow paths. The existing vehicle can thus be changed to have a structure that enables both the prevention of blinding and the quick decrease in vehicle height by simile modification of the flow paths.

In the second suspension apparatus of the present invention or that of the first application, it is further preferable, as a second application, that the rear-wheel control means starts control of a discharge of the working fluid from the corresponding actuators to lower the vehicle height, substantially simultaneously with control of a discharge of the working fluid from the corresponding actuators by the front-wheel control means.

In the second suspension apparatus of this second application, whereas the descending rate of the front-wheel vehicle height is greater than that of the rear-wheel vehicle height or the flow rate of the working fluid through the conduit of the front-wheel actuators is greater than that through the conduit of the rear-wheel actuators, the discharge of the working fluid from the front-wheel actuators is carried out substantially simultaneously with the discharge of the working fluid from the rear-wheel actuators. Although the decrease in vehicle height at the front wheels is carried out substantially concurrently with the decrease in vehicle height at the rear wheels, the greater rate of lowering the vehicle height at the front wheels than that at the rear wheels prevents the vehicle height at the front wheels from being higher than the vehicle height at the rear wheels. The second suspension apparatus of this structure thus effectively prevents the head lamps from turning upward and blinding the driver in a vehicle running in the opposite direction in the course of lowering the vehicle height. The simultaneous decrease in vehicle height at the front wheels and at the rear wheels does not require any waiting time, during which a decrease in vehicle height is in wait either at the front wheels or at the rear wheels. This structure further shortens the required time period for completing the decrease in vehicle height.

In accordance with a third preferable application, the second suspension apparatus of the present invention or that of the first application further includes: vehicle height comparing means for comparing the front-wheel vehicle height at the left and right front wheels with the rear-wheel vehicle height at the left and right rear wheels, wherein the rear-wheel control means has delay means for, when the front-wheel vehicle height is higher than the rear-wheel vehicle height, delaying control of a discharge of the working fluid from the actuators to lower the vehicle height until the front-wheel vehicle height becomes lower than the rear-wheel vehicle height.

In the second suspension apparatus of this third application, when the front-wheel vehicle height is equal to or lower than the rear-wheel vehicle height, the decrease in vehicle height at the front wheels is carried out substantially simultaneously with the decrease in vehicle height at the rear wheels, with a view to preventing the blinding and shortening the time period for the decrease in vehicle height. In case that the front-wheel vehicle height is higher than the rear-wheel vehicle height, on the other hand, the substantially simultaneous discharge of the working fluid at the front wheels and at the rear wheels is stopped and the discharge of the working fluid from the rear-wheel actuators is delayed. When the front-wheel vehicle height is higher than the rear-wheel vehicle height, the discharge of the working fluid from the front-wheel actuators is carried out prior to the discharge of the working fluid from the rear-wheel actuators, so that the decrease in vehicle height at the front wheels is implemented prior to the decrease in vehicle height at the rear wheels. When the front-wheel vehicle height becomes lower than the rear-wheel vehicle height, the discharge of the working fluid from the rear-wheel actuators is started to lower the vehicle height at the rear wheels. The second suspension apparatus of the third application does not carry out the decrease in vehicle height, while the front-wheel vehicle height is higher than the rear-wheel vehicle height. This structure securely prevents the blinding and quickly completes the decrease in vehicle height.

In accordance with a fourth preferable application, the second suspension apparatus of the present invention or that of the first application further includes: vehicle height comparing means for comparing the front-wheel vehicle height at the left and right front wheels with the rear-wheel vehicle height at the left and right rear wheels, wherein the rear-wheel control means has interruption means for, when the rear-wheel vehicle height that is higher than the front-wheel vehicle height becomes closer to the front-wheel vehicle height to have a difference of not greater than a predetermined value, temporarily stopping control of a discharge of the working fluid from the actuators to lower the vehicle height.

In the second suspension apparatus of the fourth application, the decrease in vehicle height at the front wheels is carried out substantially simultaneously with the decrease in vehicle height at the rear wheels, with a view to preventing the blinding and shortening the time period for completing the decrease in vehicle height. When the rear-wheel vehicle height that is higher than the front-wheel vehicle height becomes closer to the front-wheel vehicle height to have a difference of not greater than a predetermined value, the substantially simultaneous discharge of the working fluid at the front wheels and at the rear wheels is stopped and the discharge of the working fluid from the rear-wheel actuators is temporarily interrupted. In case that the rear-wheel vehicle height approaches to the front-wheel vehicle height, the discharge of the working fluid from the front-wheel actuators is continued while the same from the rear-wheel actuators is temporarily interrupted. This procedure lowers the vehicle height only at the front wheels. After the temporary interruption, the discharge of the working fluid from the rear-wheel actuators is resumed to lower the vehicle height at the rear wheels. In the second suspension apparatus of the fourth application, the decrease in vehicle height is securely implemented while the front-wheel vehicle height is kept lower than the rear-wheel vehicle height. This structure also effectively prevents the head lamps from turning upward and blinding the driver in a vehicle running in the opposite direction and shortens the required time period for completing the decrease in vehicle height.

The possible reason why the rear-wheel vehicle height that is higher than the front-wheel vehicle height becomes closer to the front-wheel vehicle height to have a difference of not greater than a predetermined value is an increase in loading at the rear wheels due to a shift of passengers or an increase in number of passengers.

The present invention is further directed to a third suspension apparatus, which includes actuators for respective wheels interposed between a vehicle body and the respective wheels for suspending the vehicle body and changing a vehicle height through supply and discharge of a working fluid, and controls the supply and discharge of the working fluid to and from the actuators for the respective wheels, thereby adjusting the vehicle height. The third suspension apparatus further includes: front-wheel control means for controlling supply and discharge of the working fluid to and from the actuators for left and right front wheels; and rear-wheel control means for controlling supply and discharge of the working fluid to and from the actuators for left and right rear wheels. The front-wheel control means is provided with front-wheel discharge means for continuing discharge of the working fluid from the actuators for the left and right front wheels to lower the vehicle height. The rear-wheel control means is provided with rear-wheel discharge means for starting and then continuing discharge of the working fluid from the actuators for the left and right rear wheels to lower the vehicle height, while the front-wheel discharge means continues the discharge of the working fluid from the actuators for the left and right front wheels.

In the third suspension apparatus of the present invention, the discharge of the working fluid from the front-wheel actuators continues to continuously lower the front-wheel vehicle height. The discharge of the working fluid from the rear-wheel actuators, on the other hand, starts and continues while the discharge of the working fluid from the front-wheel actuators continues. Namely the rear-wheel vehicle height starts lowering while the front-wheel vehicle height is being lowered. This structure enables the decrease in front-wheel vehicle height prior to the decrease in rear-wheel vehicle height, and subsequently carries out the simultaneous decrease in vehicle height both at the front wheels and at the rear wheels. The structure of the third suspension apparatus also prevents the vehicle height at the front wheels from being higher than the vehicle height at the rear wheels and thereby prevents the head lamps from turning upward and blinding the driver in a vehicle running in the opposite direction in the course of lowering the vehicle height. The simultaneous decrease in vehicle height at the front wheels and at the rear wheels after the start of lowering the vehicle height at the rear wheels effectively shortens the required time period for completing the decrease in vehicle height.

In accordance with a first preferable application of the third suspension apparatus, a front-wheel conduit, which the front-wheel discharge means enables the working fluid discharged from the actuators for the left and right front wheels to pass through, has a first flow resistance, and a rear-wheel conduit, which the rear-wheel discharge means enables the working fluid discharged from the actuators for the left and right rear wheels to pass through, has a second flow resistance that is greater than the first flow resistance.

In the third suspension apparatus of the first application, the front-wheel conduit, which the working fluid discharged from the front-wheel actuators passes through has a smaller flow resistance than that of the rear-wheel conduit, which the working fluid discharged from the rear-wheel actuators passes through. The flow rate of the working fluid through the front-wheel conduit is accordingly higher than the flow rate of the working fluid through the rear-wheel conduit. The decrease in vehicle height at the front wheels proceeds faster than the decrease in vehicle height at the rear wheels, since the discharge of the working fluid from the front-wheel actuators starts prior to the discharge of the working fluid from the rear-wheel actuators and the discharge rate of the working fluid from the front-wheel actuators is higher than the discharge rate of the working fluid from the rear-wheel actuators. The third suspension apparatus of this structure thus prevents the head lamps from turning upward and blinding the driver in a vehicle running in the opposite direction in the course of lowering the vehicle height. The improvement in descending rate of the vehicle height at the front wheels and the simultaneous decrease in vehicle height at the front wheels and at the rear wheels shorten the required time period for completing the decrease in vehicle height.

In accordance with a second preferable application, the third suspension apparatus further includes vehicle height comparing means for comparing the front-wheel vehicle height at the left and right front wheels with the rear-wheel vehicle height at the left and right rear wheels, wherein the rear-wheel control means has delay means for, when the front-wheel vehicle height is higher than the rear-wheel vehicle height, delaying a start of the discharge of the working fluid by the rear-wheel discharge means until the front-wheel vehicle height becomes lower than the rear-wheel vehicle height.

In the third suspension apparatus of the second application, when the front-wheel vehicle height is equal to or lower than the rear-wheel vehicle height, the discharge of the working fluid from the rear-wheel actuators starts and continues while the discharge of the working fluid from the front-wheel actuators continues. This realizes the prevention of the blinding and the quick decrease in vehicle height. When the front-wheel vehicle height is higher than the rear-wheel vehicle height, on the other hand, the start of discharging the working fluid from the rear-wheel actuators is delayed while the discharge of the working fluid from the front-wheel actuators continues. Namely the discharge of the working fluid from the front-wheel actuators under the condition of the greater front-wheel vehicle height than the rear-wheel vehicle height continues for a longer time period than that under the condition of the smaller or equal front-wheel vehicle height than or to the rear-wheel vehicle height. This procedure ensures the decrease in vehicle height at the front wheels prior to the decrease in vehicle height at the rear wheels. When the front-wheel vehicle height becomes lower than the rear-wheel vehicle height, the discharge of the working fluid from the rear-wheel actuators is started to lower the vehicle height at the rear wheels. The third suspension apparatus of the second application does not carry out the decrease in vehicle height, while the front-wheel vehicle height is higher than the rear-wheel vehicle height. This structure securely prevents the blinding and quickly completing the decrease in vehicle height.

In accordance with a third preferable application, the third suspension apparatus further includes vehicle height comparing means for comparing the front-wheel vehicle height at the left and right front wheels with the rear-wheel vehicle height at the left and right rear wheels, wherein the rear-wheel control means has interruption means for, when the rear-wheel vehicle height that is higher than the front-wheel vehicle height becomes closer to the front-wheel vehicle height to have a difference of not greater than a predetermined value, temporarily stopping the discharge of the working fluid by the rear-wheel discharge means.

In the third suspension apparatus of the third application, the decrease in front-wheel vehicle height prior to the decrease in rear-wheel vehicle height and the subsequent simultaneous decrease in vehicle height at the front wheels and at the rear wheels realize the prevention of the blinding and the quick decrease in vehicle height. When the rear-wheel vehicle height that is higher than the front-wheel vehicle height becomes closer to the front-wheel vehicle height to have a difference of not greater than a predetermined value, the simultaneous discharge of the working fluid at the front wheels and at the rear wheels is stopped and the discharge of the working fluid from the rear-wheel actuators is temporarily interrupted. In case that the rear-wheel vehicle height approaches to the front-wheel vehicle height, the discharge of the working fluid from the front-wheel actuators is continued while the same from the rear-wheel actuators is temporarily interrupted. This procedure lowers the vehicle height only at the front wheels. After the temporary interruption, the discharge of the working fluid from the rear-wheel actuators is resumed to lower the vehicle height at the rear wheels. In the third suspension apparatus of the third application, the decrease in vehicle height is securely implemented while the front-wheel vehicle height is kept lower than the rear-wheel vehicle height. This structure also effectively prevents the head lamps from turning upward and blinding the driver in a vehicle running in the opposite direction and shortens the required time period for completing the decrease in vehicle height.

The present invention is also directed to a fourth suspension apparatus, which includes actuators for respective wheels interposed between a vehicle body and the respective wheels for suspending the vehicle body and changing a vehicle height through supply and discharge of a working fluid, and controls the supply and discharge of the working fluid to and from the actuators for the respective wheels, thereby adjusting the vehicle height. The fourth suspension apparatus further includes: a front-wheel control valve for controlling supply and discharge of the working fluid to and from the actuators for left and right front wheels; a rear-wheel control valve for controlling supply and discharge of the working fluid to and from the actuators for left and right rear wheels; a front-wheel connection control valve disposed in a flow path between the front-wheel control valve and the actuators for the left and right front wheels, the front-wheel connection control valve switching the actuators for the left and right front wheels between a connecting position and a disconnecting position; a rear-wheel connection control valve disposed in a flow path between the rear-wheel control valve and the actuators for the left and right rear wheels, the rear-wheel connection control valve switching the actuators for the left and right rear wheels between a connecting position and a disconnecting position; and by-pass means for by-passing the front-wheel connection control valve and leading the working fluid to the front-wheel control valve only when the working fluid is discharged from the actuators for the left and right front wheels.

The fourth suspension apparatus of the present invention adjusts the vehicle height by carrying out the discharge and supply of the working fluid from and to the front-wheel actuators via the front-wheel control valve and the discharge and supply of the working fluid from and to the rear-wheel actuators via the rear-wheel control valve. The front-wheel connection control valve and the rear-wheel connection control valve arranged after the front-wheel control valve and the rear-wheel control valve respectively switch the front-wheel actuators and the rear-wheel actuators between a connecting position and a disconnecting position. This gives the known advantages discussed below.

An extreme input of road surface, such as tramping, causes vibrations of the left and right wheels in reversed phases along the vertical axis, and the internal pressures of the actuators for the left and right wheels are significantly varied in an alternating manner. This leads to an excessive increase in pressure in the whole system including these actuators. The front-wheel actuators and the rear-wheel actuators in the connecting position enable a working fluid to be fed to the wheels on one side, in order to relieve an increase in internal pressure of the wheels on the other side, thereby depressing the increase in pressure. When the vehicle runs on a rough road surface, such as an undulated road surface, connection of the actuators ensures the sufficient grips of the left and right wheels independently, so as to improve the driving stability. In case that the vehicle runs on a flat road surface after the adjustment of the vehicle height on a rough road surface, connection of the actuators for the left and right wheels enables the internal pressures of the actuators to be substantially equal to each other after the shift to the flat road surface. This effectively prevents the attitude of the vehicle body from being unnaturally inclined. When the front-wheel actuators and the rear-wheel actuators are in the connecting position at a turn of the vehicle, on the other hand, the rolling angle increases with an increase in steering angle. In this case, the front-wheel actuators and the rear-wheel actuators are switched to a disconnecting position, in order to depress the increase in rolling angle.

In the fourth suspension apparatus, the state of discharging the working fluid from the actuators to lower the vehicle height at the front wheels is different from that at the rear wheels. When the vehicle height is lowered at the front wheels through the discharge of the working fluid, the by-pass means enables the working fluid to by-pass the front-wheel connection control valve and to be led to the front-wheel control valve. At the rear wheels, on the other hand, the working fluid is led to the rear-wheel control valve via the rear-wheel connection control valve.

Each connection control valve for switching the corresponding actuators between the connecting position and the disconnecting position generally has an orifice arranged therein. The working fluid discharged from the actuators to lower the vehicle height passes through this orifice. The flow (discharge) of the working fluid is made by the internal pressure of the actuators generated by the dead weight of the vehicle body. The pressure loss due to the flow through the orifice decreases the flow rate of the working fluid.

The working fluid discharged from the front-wheel actuators, however, by-passes the front-wheel connection control valve as discussed previously. This structure effectively reduces the pressure loss, compared with the structure at the rear wheels, wherein the working fluid discharged from the rear-wheel actuators does not by-pass the rear-wheel connection control valve. This makes the flow rate of the working fluid from the front-wheel actuators higher than that from the rear-wheel actuators. When the working fluid is discharged from both the front-wheel actuators and the rear-wheel actuators to lower the vehicle height both at the front wheels and at the rear wheels, the greater descending rate of the front-wheel vehicle height than the descending rate of the rear-wheel vehicle height enables the vehicle height at the front wheels to be lowered faster than the vehicle height at the rear wheels. The structure of the fourth suspension apparatus prevents the vehicle height at the front wheels from being higher than the vehicle height at the rear wheels and thereby prevents the head lamps from turning upward and blinding the driver in a vehicle running in the opposite direction in the course of lowering the vehicle height. Even when the decrease in vehicle height at the front wheels and the decrease in vehicle height at the rear wheels are carried out alternately in a stepwise manner, the greater rate of lowering the vehicle height at the front wheels shortens the waiting time at the rear wheels, thereby desirably shortening the required time period for completing the decrease in vehicle height.

Part of the objects of the present invention is also realized by a method of controlling a suspension apparatus, which includes actuators interposed between a vehicle body and respective wheels for suspending the vehicle body and changing a vehicle height through supply and discharge of a working fluid and thereby adjusts the vehicle height. The method of the present invention includes the steps of:
enabling the working fluid to be discharged from the actuators for left and right front wheels, in order to lower a front-wheel vehicle at the left and right front wheels at a first descending rate; and
enabling the working fluid to be slowly discharged from the actuators for left and right rear wheels so as to lower a rear-wheel vehicle height at the left and right rear wheels at a second descending rate that is less than the first descending rate.

In the method of the present invention, when the working fluid is discharged from both the front-wheel actuators and the rear-wheel actuators to lower the vehicle height both at the front wheels and at the rear wheels, the descending rate of the front-wheel vehicle height is greater than the descending rate of the rear-wheel vehicle height. Namely the vehicle height at the front wheels is lowered faster than the vehicle height at the rear wheels. The structure of this method prevents the vehicle height at the front wheels from being higher than the vehicle height at the rear wheels and thereby prevents the head lamps from turning upward and blinding the driver in a vehicle running in the opposite direction in the course of lowering the vehicle height. The greater rate of lowering the vehicle height at the front wheels shortens the waiting time at the rear wheels, thereby desirably shortening the required time period for completing the decrease in vehicle height.

### BRIEF DESCRIPTION OF THE DRAWINGS

Fig. 1 schematically illustrates a fluid circuit in a suspension apparatus 10 constructed as a fluid pressure suspension as a first embodiment according to the present invention;
Fig. 2 is a flowchart showing a routine of adjusting the vehicle height executed by an ECU 60 of the suspension apparatus 10 in the first embodiment;
Fig. 3 is a flowchart showing details of the process of the vehicle height adjustment carried out at step S130 in the flowchart of Fig. 2;
Fig. 4 schematically illustrates a fluid circuit in a suspension apparatus 10A constructed as a fluid pressure suspension as a second embodiment according to the present invention; and
Fig. 5 is a flowchart showing a routine of connecting actuators executed by the ECU 60 of the suspension apparatus 10A in the second embodiment.

### DESCRIPTION OF THE PREFERRED EMBODIMENTS

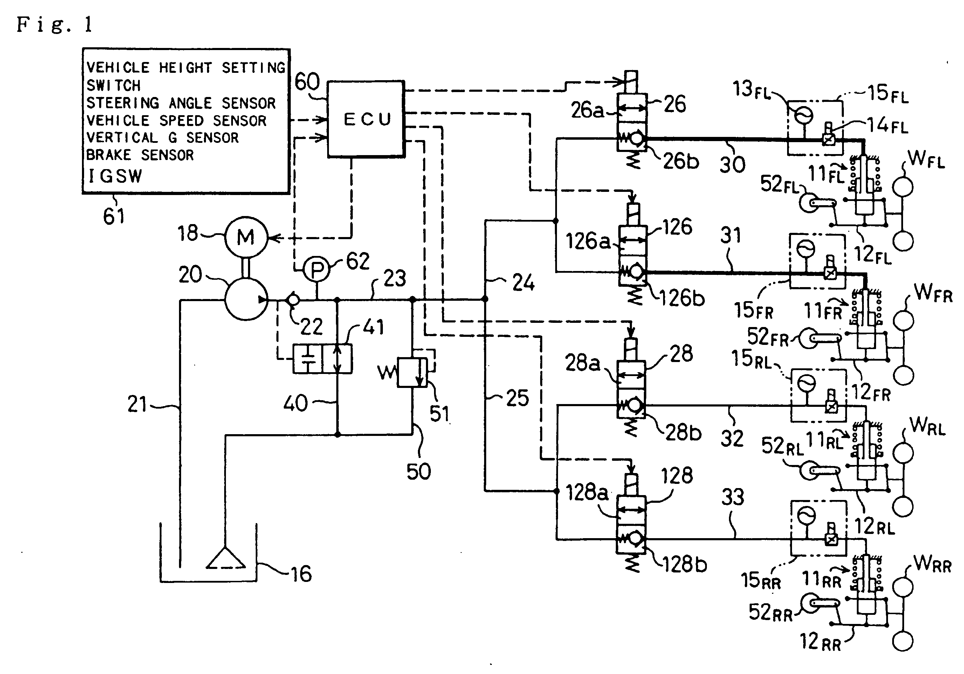

Some modes of carrying out the present invention are described below as preferred embodiments. Referring to Fig. 1, the suspension apparatus 10 is constructed as a fluid pressure suspension utilizing a fluid pressure cylinder.

The suspension apparatus 10 is provided with actuators 11i (11FL, 11FR, 11RL, and 11RR) for a left front wheel WFL, a right front wheel WFR, a left rear wheel WRL, and a right rear wheel WRR. In the description below, the subscript 'i' arbitrarily represents FL, FR, RL, and RR corresponding to the respective wheels.

The actuator 11i, which is a cylinder piston device, is interposed between the vehicle body and a suspension member 12i for supporting the corresponding wheel (that is, between the vehicle body and each wheel) to suspend the vehicle body. The actuator 11i vertically moves the piston every time when a working fluid (oil in this embodiment) is fed to or discharged from a working fluid chamber, so as to change the vehicle height along the vertical axis at the corresponding wheel. A damping force varying mechanism 15i including an accumulator 13i and a variable restrictor 14i is disposed in the flow path before each actuator 11i. The damping force varying mechanism 15i enables the actuator 11i to vary the damping force against the vertical movement of the vehicle body.

The suspension apparatus 10 further includes a reserve tank 16 for storing oil, which is fed to and discharged from the respective actuators 11i from and to the reserve tank 16 in the following manner.

Oil stored in the reserve tank 16 is drawn through a suction pipe 21 by a pump 20 driven by a motor 18 and fed under pressure to the constituents in the flow path after the pump 20. The oil drawn by the pump 20 is flown through a main supply conduit 23 via a first check valve 22 and reaches a front-wheel supply conduit 24 and a rear-wheel supply conduit 25 which are branched off from the main supply conduit 23. The front-wheel supply conduit 24 further branches off to a left front-wheel conduit 30 and a right front-wheel conduit 31. A first front-wheel control valve 26 for adjusting the vehicle height at the left front wheel WFL is disposed in the left front-wheel conduit 30, whereas a second front-wheel control valve 126 for adjusting the vehicle height at the right front wheel WFR is disposed in the right front-wheel conduit 31. In a similar manner, the rear-wheel supply conduit 25 further branches off to a left rear-wheel conduit 32 and a right rear-wheel conduit 33. A first rear-wheel control valve 28 for adjusting the vehicle height at the left rear wheel WRL is disposed in the left rear-wheel conduit 32, whereas a second rear-wheel control valve 128 for adjusting the vehicle height at the right rear wheel WRR is disposed in the right rear-wheel conduit 33.

Portions of the left front-wheel conduit 30 and the right front-wheel conduit 31, that is, pathways from the respective front-wheel control valves 26 and 126 to the actuators 11i, are formed to have a greater diameter than that of the left rear-wheel conduit 32 and the right rear-wheel conduit 33. It is preferable that the effective diameter of the left front-wheel conduit 30 and the right front-wheel conduit 31 is greater than that of the left rear-wheel conduit 32 and the right rear-wheel conduit 33 by 10 to 20%.

Referring to Fig. 1, the first front-wheel control valve 26 is a two-position selector valve selectively switched between a two-way connecting position 26a and a single-way connecting position 26b. At the two-way connecting position 26a, the flow path of the conduits before and after the front-wheel control valve 26 is open in both directions. At the single-way connecting position 26b, on the other hand, the oil flow from the pump 20 is shut off while the oil flow from the actuator 11i is allowed only under a predetermined or greater pressure. The first front-wheel control valve 26 is kept in the single-way connecting position 26b shown in Fig. 1 in the ordinary state and changed to the two-way connecting position 26a at the time of adjusting the vehicle height (that is, at the time of raising or lowering the vehicle height). The second front-wheel control valve 126 and the rear-wheel control valves 28 and 128 have structures similar to that of the first front-wheel control valve 26.

When the front-wheel control valves 26 and 126 and the rear-wheel control valves 28 and 128 are set in the respective single-way connecting positions, no oil is flown from the actuators 11i under an ordinary internal pressure of the actuators 11i for the decrease in vehicle height. The oil flow from the actuators 11i is allowed only when a pressure exceeding the ordinary internal pressure is applied to the actuators 11i. This structure enables the vehicle height at the moment to be maintained by switching the front-wheel control valves 26 and 126 and the rear-wheel control valves 28 and 128 to the respective single-way connecting positions.

When the front-wheel control valves 26 and 126 and the rear-wheel control valves 28 and 128 are switched from the single-way connecting positions 26b, 126b, 28b, and 128b shown in Fig. 1 to the two-way connecting positions 26a, 126a, 28a, and 128a, oil flowing through the main supply conduit 23 to the front-wheel supply conduit 24 and the rear-wheel supply conduit 25 passes through these control valves 26, 126, 28, and 128 and is fed to the respective actuators 11i. The vehicle height is accordingly increased at the wheels corresponding to the actuators 11i that have received the supply of oil flow. The front-wheel control valves 26 and 126 and the rear-wheel control valves 28 and 128 are switched independently, and the vehicle height can thus be increased separately at each wheel.

The suspension apparatus 10 includes a drain pipe 40 and a discharge control valve 41 as a mechanism for discharging oil from the actuators 11i to lower the vehicle height. The drain pipe 40 is branched off from the main supply conduit 23 to reach the reserve tank 16, and is opened and closed by the discharge control valve 41. The discharge control valve 41 is a two-position selector valve actuated with a pressure of the flow path before the first check valve 22 as a pilot pressure. The discharge control valve 41 is switched from an opening position shown in Fig. 1 to a closing position in order to close the drain pipe 40 at the time of driving the pump 20, that is, at the time of increasing the vehicle height. When the pump 20 is stopped to lower the pressure of the flow path before the first check valve 22 and heighten the pressure of the flow path after the first check valve 22, that is, when the vehicle height is lowered, the discharge control valve 41 is at the opening position shown in Fig. 1 to open the drain pipe 40.

In the suspension apparatus 10 of the first embodiment, oil (working fluid) is flown in the direction opposite to that of the oil flow in case of the oil supply discussed above, and is discharged from the respective actuators 11i, in order to lower the vehicle height. In case of the oil discharge, the front-wheel control valves 26 and 126 and the rear-wheel control valves 28 and 128 are also switched independently, and the vehicle height can thus be decreased separately at each wheel.

The vehicle height is maintained by switching the front-wheel control valves 26 and 126 and the rear-wheel control valves 28 and 128 to the single-way connecting positions 26b, 126b, 28b, and 128b as discussed above. In this state, the motor 18 is at a stop.

The suspension apparatus 10 is also provided with a reflux conduit 50 that is branched off from the main supply conduit 23 and joins the drain pipe 40. The reflux conduit 50 forcibly returns oil into the reserve tank 16 when the pressure in the main supply conduit 23 unintentionally increases. The reflux conduit 50 is opened and closed by a relief valve 51. The relief valve 51 closes the flow path of the reflux conduit 50 in the ordinary state and is actuated with an increase in pressure in the main supply conduit 23 to connect the reflux conduit 50 to the drain pipe 40. When the pressure increases, oil is not supplied to the actuators 11i but is returned into the reserve tank 16. This structure prevents oil from being fed to the actuators 11i at the unintentionally high pressure and thereby protects the actuators 11i from damages.

While the front-wheel control valve 26 is at the single-way connecting position 26b shown in Fig. 1, in case that the internal pressure of the actuator 11i is abnormally heightened by some cause and oil is discharged to the main supply conduit 23, the pressure increase causes the discharge control valve 41 to open the drain pipe 40 and actuates the relief valve 51 to connect the reflux conduit 50 to the drain pipe 40. Under such abnormal conditions, oil is quickly returned to the reserve tank 16 through the drain pipe 40 and the reflux conduit 50.

The suspension apparatus 10 has vehicle height sensors 52i corresponding to the respective actuators 11i. The vehicle height sensor 52i measures the vehicle height at each wheel and outputs a detection signal representing an observed vehicle height hi to an electronic control unit (ECU) 60.

The ECU 60 is constructed as a microcomputer including a CPU, a ROM, a RAM, and a timer, and receives signals output from a group of sensors and switches 61 and signals from a pressure sensor 62 that measures the pressure in the main supply conduit 23. The group of sensors and switches 61 include a steering angle sensor, a vehicle speed sensor, a vertical acceleration (vertical G) sensor, a vehicle height setting switch, a brake sensor, and an ignition switch (IGSW switch), in addition to the vehicle height sensors 52i for the respective wheels. The ECU 60 outputs a variety of driving signals required for the adjustment of the vehicle height to the front-wheel control valves 26 and 126, the rear-wheel control valves 28 and 128, and the motor 18, in response to these input signals. The ECU 60 is further connected to the variable restrictors 14i of the damping force varying mechanisms 15i and regulates the openings of the variable restrictors 14i, so as to enable the actuators 11i to vary the damping force.

The driver operates the vehicle height setting switch to select the level of the vehicle height among the alternatives of HIGH, NORMAL, and LOW and outputs a signal representing the selected level of the vehicle height. It is desirable to maintain the actual height of the vehicle at the level selected by the vehicle height setting switch, that is, at a standard vehicle height. In accordance with another preferable application, the vehicle height setting switch may be replaced by a switch for setting a vehicle height mode. When a HIGH mode is selected, the switch outputs a signal to set the vehicle height at the HIGH level under an ordinary driving condition and outputs a signal to set the vehicle height at the NORMAL level under a high-speed driving condition. When a NORMAL mode is selected, on the other hand, the switch outputs a signal to set the vehicle height at the NORMAL level under the ordinary driving condition and outputs a signal to set the vehicle height at the LOW level under the high-speed driving condition. In this case, the standard vehicle height is selected according to the vehicle speed among the alternatives of HIGH, NORMAL, and LOW.

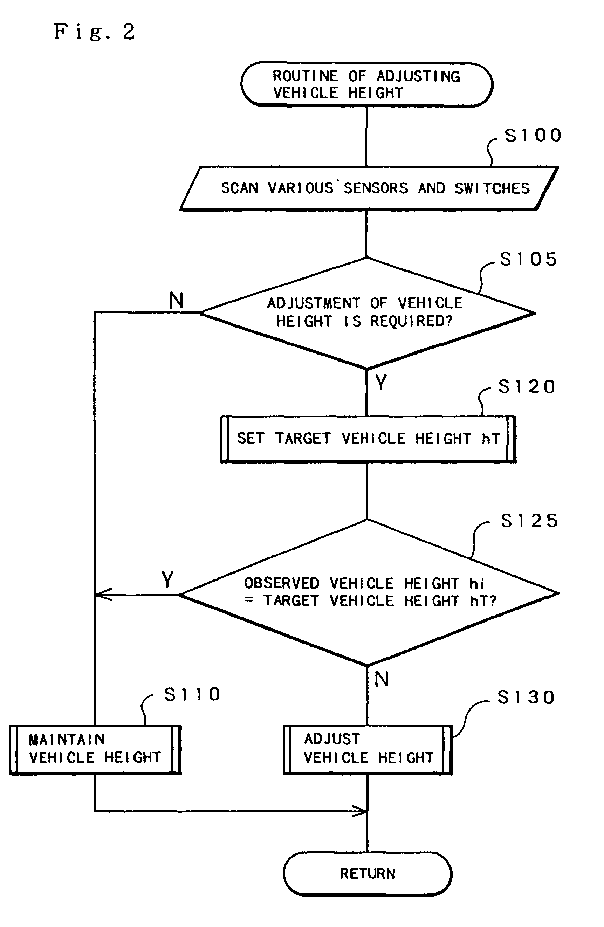

Fig. 2 is a flowchart showing a routine of adjusting the vehicle height executed by the ECU 60.

The routine of adjusting the vehicle height shown by the flowchart of Fig. 2 starts immediately after an operation of the IGSW switch and is repeatedly executed at predetermined time intervals. A known initialization process, for example, clearing a flag as discussed later, is carried out immediately after each operation of the IGSW switch. When the program enters the vehicle height adjustment routine, the ECU 60 first scans the variety of sensors and switches mentioned above and reads the signals required for the adjustment of the vehicle height at step S100. The signals input at step S100 include data of vehicle speed measured by the vehicle speed sensor, data of vehicle height hi (that is, a vehicle height hFL at the left front wheel, a vehicle height hFR at the right front wheel, a vehicle height hRL at the left rear wheel, and a vehicle height hRR at the right rear wheel) measured by the vehicle height sensors 52i, a signal output from the brake switch to represent operation or non-operation of a foot brake, data of steering angle measured by the steering angle sensor, and a vehicle height setting signal output from the vehicle height setting switch. Required signal processing (for example, calculation of the steering angular velocity from the input data of steering angle) is carried out with the scan.

After the scan of the sensors and switches, the ECU 60 determines whether or not the adjustment of the vehicle height is required at step S105, based on the various input signals. When the vehicle is in the state of an abrupt turn or in the state of a high-speed turn, the vehicle is significantly rolled. The adjustment of the vehicle height under such conditions leads to deterioration of the driving stability and is thus not desirable. When it is determined at step S105 that the adjustment of the vehicle height is not required, for example, based on the signal output from the steering angle sensor, the program does not carry out any adjustment of the vehicle height but proceeds to step S110 to maintain the vehicle height at the moment. In accordance with a concrete procedure, the ECU 60 outputs switching signals to the front-wheel control valves 26 and 126 and the rear-wheel control valves 28 and 128 to switch these control valves 26, 126, 28, and 128 to the respective single-way connecting positions 26b, 126b, 28b, and 128b and outputs a stop signal to the motor 18, thereby maintaining the vehicle height in the manner discussed previously. The program then exits from the vehicle height adjustment routine.

When the answer is affirmative at step S105, on the other hand, the program proceeds to step S120, at which the ECU 60 sets a target vehicle height hT, which is the target of the vehicle height adjustment, for example, based on the vehicle speed at the moment and the vehicle height setting signal (standard vehicle height hH) output from the vehicle height setting switch. It is then determined whether or not the observed vehicle height hi coincides with the target vehicle height hT at step S125. In this embodiment, the vehicle height can be adjusted independently for the left and right front wheels and for the left and right rear wheels. As for the left and right front wheels, the mean value of the left front-wheel vehicle height hFL and the right front-wheel vehicle height hFR is used as the observed vehicle height hi for the determination. As for the left and right rear wheels, the mean value of the left rear-wheel vehicle height hRL and the right rear-wheel vehicle height hRR is used as the observed vehicle height hi for the determination. The observed vehicle height hi is determined to coincide with the target vehicle height hT when the observed vehicle height hi is within a predetermined range around the target vehicle height hT (that is, the target vehicle height hT ± e).

When the answer is affirmative for both the front wheels and the rear wheels at step S125, the program determines no requirement for the adjustment of the vehicle height and proceeds to step S110 to maintain the vehicle height at the moment. In case that the observed vehicle height hi coincides with the target vehicle height hT (that is, within the range of target vehicle height hT ± e) only for the left and right front wheels or only for the left and right rear wheels, however, the answer at step S125 is not affirmative but negative. Even when adjustment of the vehicle height is carried out only at the front wheels or at the rear wheels, the subsequent process is varied depending upon the direction of the vehicle height adjustment, that is, either the increase in vehicle height or the decrease in vehicle height, and the difference between the front-wheel vehicle height and the rear-wheel vehicle height as described below.

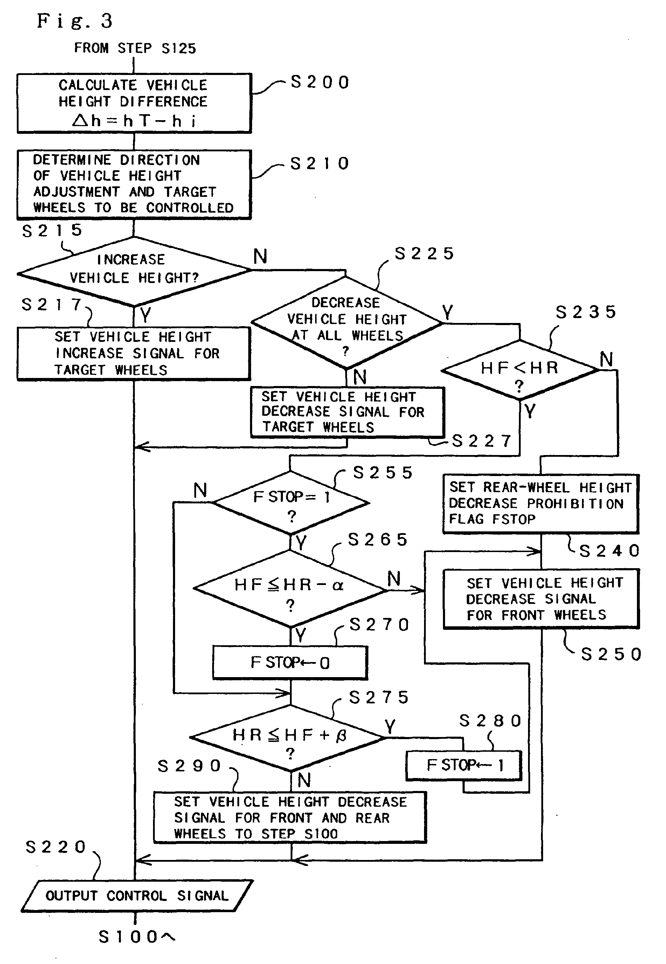

When it is determined that the observed vehicle height hi does not coincide with the target vehicle height hT at step S125, the program proceeds to step S130 to make the observed vehicle height hi coincident with the target vehicle height hT set at step S120. Fig. 3 is a flowchart showing details of the process of the vehicle height adjustment carried out at step S130.

When the program enters the routine of Fig. 3, the ECU 60 first calculates a vehicle height difference or deviation Δh of the observed vehicle height hi from the target vehicle height hT for each wheel at step S200, and determines the direction of the vehicle height adjustment (increase or decrease in vehicle height) and the target wheels to be controlled, based on the calculated vehicle height difference Δh at step S210. At a decision point S215, it is determined whether the result of determination at step S210 represents an increase in vehicle height. In case that the answer is affirmative at step S215, the ECU 60 sets a control signal (vehicle height increase signal) required for raising the vehicle height at the target wheels to be controlled at step S217, and outputs the control signal to the control valves corresponding to the target wheels at step S220, so as to supply the oil to the actuators 11i for the target wheels and thereby increase the vehicle height at the target wheels.

The following describes a concrete procedure of increasing the vehicle height. The ECU 60 outputs a control signal to the motor 18 in order to drive the motor 18, while outputting switching signals to the control valves corresponding to the target wheels to be controlled, for example, the rear-wheel control valves 28 and 128 for the left and right rear wheels, in order to switch the control valves 28 and 128 to the respective two-way connecting positions 28a and 128a. This procedure enables the oil to be supplied to the actuators 11i corresponding to the rear wheels, thereby increasing the vehicle height. In this case, the time period for which the rear-wheel control valves 28 and 128 are kept in the two-way connecting positions 28a and 128a, that is, the control amount for increase in vehicle height, depends upon the vehicle height difference Δh. The control amount for increase in vehicle height corresponding to the calculated vehicle height difference Δh is read from a map that has been prepared in advance and stored in the RAM. When the increase in vehicle height is required both at the front wheels and at the rear wheels, the ECU 60 outputs the control signals to the front-wheel control valves 26 and 126 at a different timing after outputting the control signals to the rear-wheel control valves 28 and 128. This procedure ensures that the increase in vehicle height at the rear wheels is always carried out prior to the increase in vehicle height at the front wheels.

In case that the answer is negative at step S215, that is, in case that the vehicle height is to be decreased, on the contrary, the program proceeds to step S225 to determine whether or not the decrease in vehicle height is required for all the wheels based on the result of determination at step S210. When it is determined that the decrease in vehicle height is not required for all the wheels at step S225, the ECU 60 sets a control signal (vehicle height decrease signal) required for lowering the vehicle height at the target wheel to be controlled at step S227, and outputs the control signal to the control valve corresponding to the target wheel at step S220, so as to discharge the oil from the actuator 11i for the target wheel, for example, the actuator 11FL for the left front wheel WFL, and thereby decrease the vehicle height at the target wheel. The following describes a concrete procedure of lowering the vehicle height, for example, at the left front wheel WFL. The ECU 60 outputs a control signal to the motor 18 in order to stop the operation of the motor 18, while outputting a switching signal to the front-wheel control valve 26 in order to switch the control valve 26 to the two-way connecting position 26a. This procedure enables the oil to be discharged from the actuator 11FL corresponding to the left front wheel WFL, thereby lowering the vehicle height at the left front wheel WFL. In this case, the time period for which the front-wheel control valve 26 is kept in the two-way connecting position 26a, that is, the control amount for decrease in vehicle height, also depends upon the vehicle height difference Δh.

When it is determined that the decrease in vehicle height is required for all the wheels at step S225, on the contrary, the ECU 60 compares a front-wheel vehicle height HF (that is, the average of a left front-wheel vehicle height hFL and a right front-wheel vehicle height hFR) with a rear-wheel vehicle height HR (that is, the average of a left rear-wheel vehicle height hRL and a right rear-wheel vehicle height hRR) to determine whether or not the front-wheel vehicle height HF is lower than the rear-wheel vehicle height HR at step S235.

In case that the front-wheel vehicle height HF is determined to be higher than the rear-wheel vehicle height HR at step S235, a flag for prohibiting the decrease in vehicle height at the rear wheels (a rear-wheel height decrease prohibition flag FSTOP) is set equal to one, in order to delay the decrease in vehicle height at the rear wheels at step S240. The ECU 60 then sets a control signal (vehicle height decrease signal) required for lowering the vehicle height at the front wheels at step S250, and outputs the control signal to the control valves corresponding to the front wheels at step S220. In this case, the processing of step S250 follows the affirmative answer at step S225 (that is, determination that the decrease in vehicle height is required for all the wheels), the negative answer at step S235, and the prohibition of decrease in vehicle height at the rear wheels at step S240. The control signal is accordingly set at step S250 to lower the vehicle height at the left front wheel WFL and the right front wheel WFR. At step S220, the ECU 60 stops operation of the motor 18 and switches the front-wheel control valves 26 and 126 to the respective two-way connecting positions 26a and 126a, thereby lowering the vehicle height at the left front wheel WFL and the right front wheel WFR. In this case, the program lowers the vehicle height only at the front wheels while not carrying out the decrease in vehicle height at the rear wheels. The time period for which the front-wheel control valves 26 and 126 are kept in the two-way connecting positions 26a and 126a, that is, the control amount for decrease in vehicle height, also depends upon the vehicle height difference Δh.

When the front-wheel vehicle height HF is determined to be lower than the rear-wheel vehicle height HR at step S235, on the other hand, it is determined whether or not the rear-wheel height decrease prohibition flag FSTOP is equal to one at step S255. The value of the flag represents whether the decrease in vehicle height is being carried out or prohibited at the rear wheels. When the answer is affirmative (FSTOP = 1) at step S255, that is, when the decrease in vehicle height at the rear wheels is prohibited, the processing for lowering the vehicle height follows the procedure described below.

The flag FSTOP =1 means that the front-wheel vehicle height HF has been determined to be higher than the rear-wheel vehicle height HR and the program has carried out the decrease in vehicle height at the front wheels while delaying or prohibiting the decrease in vehicle height at the rear wheels in the previous cycle of this routine. In this case, the vehicle height has been lowered only at the front wheels in the previous cycle of this routine, and the answer at step S235 is accordingly affirmative (front-wheel vehicle height HF < rear-wheel vehicle height HR) in the current cycle of this routine. The affirmative answer (front-wheel vehicle height HF < rear-wheel vehicle height HR) is also given at step S235 when the decrease in vehicle height has been started simultaneously at the front wheels and at the rear wheels or when the decrease in vehicle height continues or is being carried out simultaneously at the front wheels and at the rear wheels under the condition that the front-wheel vehicle height HF is lower than the rear-wheel vehicle height HR. The answer at step S255 determines whether the affirmative answer at step S235 corresponds to the former case, in which the program has carried out the decrease in vehicle height only at the front wheels while prohibiting the decrease in vehicle height at the rear wheels, or the latter case, in which the decrease in vehicle height has been started simultaneously or continues simultaneously at the front wheels and at the rear wheels. When the answer is affirmative (FSTOP = 1) at step S255, the program has carried out the decrease in vehicle height only at the front wheels while prohibiting the decrease in vehicle height at the rear wheels in the previous cycle of this routine. When the answer is negative (FSTOP = 0) at step S255, on the contrary, the decrease in vehicle height has been started simultaneously or continues simultaneously at the front wheels and at the rear wheels. In the latter case, the program proceeds to step S275 described below.

When the answer is affirmative at step S255, the program carries out the following procedure to specify a timing for starting the decrease in vehicle height at the rear wheels, which has been once prohibited. The ECU 60 first determines whether or not the front-wheel vehicle height HF is lower than the rear-wheel vehicle height HR at least by a predetermined value α (for example, 10 mm) at step S265. The affirmative answer at step S265 means that the decrease in vehicle height carried out only at the front wheels has sufficiently lowered the vehicle height at the front wheels than that at the rear wheels. In this case, the program goes to step S270 to set the rear-wheel height decrease prohibition flag FSTOP is set equal to zero, so as to cancel the prohibition and enable the decrease in vehicle height at the rear wheels. When the answer is negative at step S265, on the other hand, the program determines that the front-wheel vehicle height HF is not sufficiently lower than the rear-wheel vehicle height HR and proceeds to steps S250 and S220 to continue lowering the vehicle height only at the front wheels while prohibiting the decrease in vehicle height at the rear wheels. In this case, the rear-wheel height decrease prohibition flag FSTOP is kept equal to one, because of the affirmative answer at step S255.

After the processing at step S270 to enable the decrease in vehicle height at the rear wheels, the program proceeds to step S275. The processing of step S275 is carried out after the affirmative answer at step S235 (front-wheel vehicle height HF < rear-wheel vehicle height HR) and the affirmative answer at step S265 (front-wheel vehicle height HF ≤ rear-wheel vehicle height - α), that is, when the rear-wheel vehicle height HR is sufficiently higher than the front-wheel vehicle height HF and the decrease in vehicle height is allowed at the rear wheels. Alternatively the processing of step S275 is carried out after the negative answer at step S255 (FSTOP = 0), that is, when the decrease in vehicle height has been started simultaneously or continues simultaneously at the front wheels and at the rear wheels. There is, however, a fear that the decrease in vehicle height at the rear wheels results in making the rear-wheel vehicle height HR equal to or even lower than the front-wheel vehicle height HF. For example, in case that an increase in loading at the rear wheels due to a shift of passengers or an increase in number of passengers enhances the decreasing rate at the rear wheels, the rear-wheel vehicle height HR may become equal to or lower than the front-wheel vehicle height HF. In order to avoid such inconvenience, it is determined whether or not the rear-wheel vehicle height HR becomes closer to the front-wheel vehicle height HF to have a difference of not greater than a predetermined value P (for example 5 mm) at step S275.

The affirmative answer at step S275 means that the rear-wheel vehicle height HR comes excessively close to the front-wheel vehicle height HF and there is a fear of making the rear-wheel vehicle height HR equal to or even lower than the front-wheel vehicle height HF. In this case, the ECU 60 sets the rear-wheel height decrease prohibition flag FSTOP equal to one, in order to temporarily interrupt the further decrease in vehicle height at the rear wheels at step S280. The program then proceeds to steps S250 and S220 to continue lowering the vehicle height only at the front wheels.

The negative answer at step S275 means, on the other hand, that the rear-wheel vehicle height HR is sufficiently apart from the front-wheel vehicle height HF and there is no fear of making the rear-wheel vehicle height HR equal to or lower than the front-wheel vehicle height HF. In this case, the ECU 60 sets a control signal (vehicle height decrease signal) required for lowering the vehicle height simultaneously at the front wheels and at the rear wheels at step S290, and outputs the control signal to the control valves corresponding to both the front wheels and the rear wheels at step S220. In accordance with a concrete procedure, the ECU 60 outputs a control signal to the motor 18 in order stop the operation of the motor 18, while outputting switching signals to all the front-wheel control valves 26 and 126 and the rear-wheel control valves 28 and 128 in order to switch these control valves 26, 126, 28, and 128 to the respective two-way connecting positions 26a, 126a, 28a, and 128a. This procedure enables the oil to be discharged from the actuators 11i corresponding to both the front wheels and the rear wheels, thereby lowering the vehicle height simultaneously at the front wheels and the rear wheels.

As discussed above, in the suspension apparatus 10 of the embodiment, the left front-wheel conduit 30 and the right front-wheel conduit 31, which function as discharge conduits of oil from the actuators 11FL and 11FR corresponding to the left front wheel WFL and the right front wheel WFR, have the greater effective diameters than those of the left rear-wheel conduit 32 and the right rear-wheel conduit 33 for the left rear wheel WRL and the right rear wheel WRR. The flow resistance in the left front-wheel conduit 30 and the right front-wheel conduit 31 is accordingly smaller than that in the left rear-wheel conduit 32 and the right rear-wheel conduit 33. This means that oil is discharged from the actuators 11FL and 11FR corresponding to the front wheels at a greater rate than that from the actuators 11RL and 11RR corresponding to the rear wheels.

After enhancing the discharge rate of oil at the front wheels, the program carries out the processing of steps S290 and S220 to output control signals simultaneously to the front-wheel control valves 26 and 126 and the rear-wheel control valves 28 and 128 and enable oil to be simultaneously discharged from the actuators 11i corresponding to the front wheels and the rear wheels. The decrease in vehicle height at the front wheels is thus carried out simultaneously with the decrease in vehicle height at the rear wheels. The greater discharge rate of oil at the front wheels ensures that the vehicle height at the front wheels is lowered at a higher rate than that at the rear wheels. This effectively prevents the vehicle height at the front wheels from being higher than the vehicle height at the rear wheels in the course of lowering the vehicle height. The simultaneous decrease in vehicle height at the front wheels and at the rear wheels does not require any wait time to delay the procedure of lowering the vehicle height either at the front wheels or at the rear wheels. The structure of the suspension apparatus 10 of the first embodiment effectively prevents the head lamps from turning upward and blinding the driver in a vehicle running in the opposite direction in the course of lowering the vehicle height. This structure also shortens the time period required for completing the decrease in vehicle height.

The suspension apparatus 10 of the embodiment has the following effects.
(1) The simultaneous decrease in vehicle height at the front wheels and at the rear wheels is carried out after the affirmative answer at step S235 (front-wheel vehicle height HF < rear-wheel vehicle height HR) and the negative answer at step S275 under the condition of the rear-wheel height decrease prohibition flag FSTOP =0 (rear-wheel vehicle height HR > front-wheel vehicle height HF + β). The negative answer at step S235 (front-wheel vehicle height HF > rear-wheel vehicle height HR) or the negative answer at step S265 under the condition of the rear-wheel height decrease prohibition flag FSTOP = 1 (front-wheel vehicle height HF > rear-wheel vehicle height HR - α), on the other hand, causes the program to prohibit the decrease in vehicle height at the rear wheels at step S240 and to delay the process of discharging oil from the actuators 11RL and 11RR corresponding to the left rear wheel WRL and the right rear wheel WRR, thereby preventing the simultaneous decrease in vehicle height at the front wheels and at the rear wheels. In case that the front-wheel vehicle height HF is higher than the rear-wheel vehicle height HR or the front-wheel vehicle height HF is lower than the rear-wheel vehicle height HR to have a difference of less than the predetermined value α, the program continues the oil discharge from the actuators 11FL and 11FR corresponding to the left front wheel WFL and the right front wheel WFR, thereby lowering the vehicle height only at the front wheels at steps S250 and S220. When the front-wheel vehicle height HF becomes sufficiently lower than the rear-wheel vehicle height HR to have a difference of not less than the predetermined value α, the program starts the oil discharge from the actuators 11RL and 11RR corresponding to the left rear wheel WRL and the right rear wheel WRR, thereby lowering the vehicle height simultaneously at the front wheels and at the rear wheels at steps S290 and S220. The structure of the suspension apparatus 10 prevents the decrease in vehicle height at the rear wheels while the front-wheel vehicle height HF is higher than the rear-wheel vehicle height HR. This structure securely prevents the head lamps from turning upward and blinding the driver in a vehicle running in the opposite direction.
(2) The simultaneous decrease in vehicle height at the front wheels and at the rear wheels is carried out after the affirmative answer at step S235 and the negative answer at step S275 as discussed previously. When the rear-wheel vehicle height HR that is higher than the front-wheel vehicle height HF comes closer to the front-wheel vehicle height HF to have the difference of not greater than the predetermined value β at step S275, the program prohibits the further decrease in vehicle height at the rear wheels at step S280 and temporarily interrupts the oil discharge from the actuators 11RL and 11RR corresponding to the left rear wheel WRL and the right rear wheel WRR, thereby stopping the simultaneous decrease in vehicle height at the front wheels and at the rear wheels. In case that the rear-wheel vehicle height HR approaches to the front-wheel vehicle height HF, while the oil discharge from the actuators 11RL and 11RR for the rear wheels is interrupted temporarily, the oil discharge from the actuators 11FL and 11FR for the front wheels is continued to lower the vehicle height only at the front wheels. When the rear-wheel vehicle height HR comes apart from the front-wheel vehicle height HF to have the difference of greater than the predetermined value β at step S275, the program cancels the temporary interruption and resumes the oil discharge from the actuators 11RL and 11RR for the rear wheels, thereby enabling the vehicle height to be lowered simultaneously at the front wheels and at the rear wheels. The structure of the suspension apparatus 10 can carry out the decrease in vehicle height while keeping the front-wheel vehicle height HF lower than the rear-wheel vehicle height HR. This structure securely prevents the head lamps from turning upward and blinding the driver in a vehicle running in the opposite direction, and shortens the required time period for completing the decrease in vehicle height.

The simultaneous decrease in vehicle height at the front wheels and at the rear wheels is carried out after the affirmative answer at step S235 and the negative answer at step S275 as discussed previously. While the decrease in vehicle height at the front wheels continues irrespective of the affirmative or negative answer at step S235, the decrease in vehicle height at the rear wheels may be delayed (at step S240) or temporarily interrupted (at step S280) based on the result of comparison between the front-wheel vehicle height HF and the rear-wheel vehicle height HR. The suspension apparatus 10 of the first embodiment can thus be modified as discussed below.

A modified structure, wherein the left front-wheel conduit 30 and the right front-wheel conduit 31 have the effective diameters identical with those of the left rear-wheel conduit 32 and the right rear-wheel conduit 33, also carries out the vehicle height adjustment routine shown in the flowcharts of Figs. 2 and 3. The suspension apparatus 10 of modified structure can exert the same effects as those described above, that is, preventing the head lamps from turning upward and blinding the driver in a vehicle running in the opposite direction in the course of lowering the vehicle height and shortening the required time period for completing the decrease in vehicle height.

Upon condition that the decrease in vehicle height is required, the suspension apparatus 10 of modified structure continues the oil discharge from the actuators 11FL and 11FR for the front wheels, so as to continuously lower the vehicle height at the front wheels. While the oil discharge from the actuators 11FL and 11FR for the front wheels continues, the negative answer at step S275 starts and continues the oil discharge from the actuators 11RL and 11RR for the rear wheels. Even when the left front-wheel conduit 30 and the right front-wheel conduit 31 have the effective diameters identical with those of the left rear-wheel conduit 32 and the right rear-wheel conduit 33, this procedure enables the simultaneous decrease in vehicle height at the front wheels and at the rear wheels only after the decrease in vehicle height at the front wheels. The suspension apparatus 10 of modified structure thus effectively prevents the head lamps from turning upward and blinding the driver in a vehicle running in the opposite direction in the course of lowering the vehicle height. The decrease in vehicle height at the rear wheels is carried out simultaneously with the decrease in vehicle height at the front wheels after a start of oil discharge from the actuators 11RL and 11RR for the rear wheels. This structure shortens the required time period for completing the decrease in vehicle height.

The suspension apparatus 10 of modified structure can also exert the effects (1) and (2) mentioned above.

The following describes another suspension apparatus 10A as a second embodiment according to the present invention. In the suspension apparatus 10A of the second embodiment, the same constituents as those of the suspension apparatus 10 of the first embodiment are shown by the like numerals and symbols and not specifically described here.

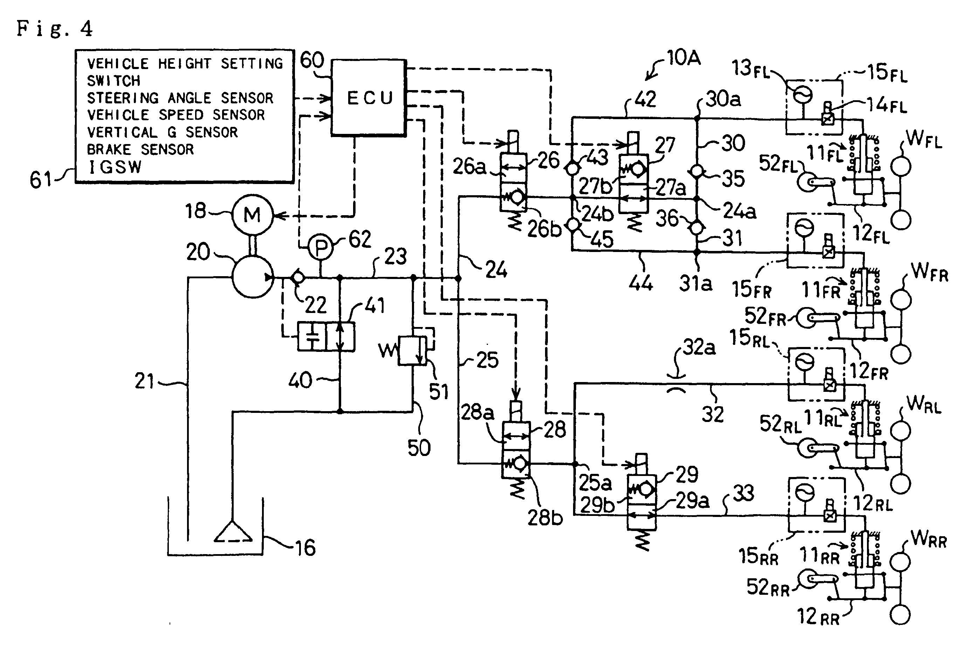

Fig. 4 schematically illustrates a fluid circuit in the suspension apparatus 10A of the second embodiment. Referring to Fig. 4, the suspension apparatus 10A has different circuit structures at the front wheels and at the rear wheels. The suspension apparatus 10A has the front-wheel supply conduit 24 and the rear-wheel supply conduit 25 which are branched off from the main supply conduit 23. A front-wheel control valve 26 for adjusting the vehicle height at the left and the right front wheels WFL and WFR and a front-wheel connection control valve 27 for switching the actuators 11FL and 11FR corresponding to the left front wheel WFL and the right front wheel WFR between a connecting position and a disconnecting position are arranged in series in this sequence in the front-wheel supply conduit 24. A rear-wheel control valve 28 for adjusting the vehicle height at the left and the right rear wheels WRL and WRR is disposed in the rear-wheel supply conduit 25, which further branches off at the rear-wheel control valve 28 to a left rear-wheel conduit 32 and a right rear-wheel conduit 33. A rear-wheel connection control valve 29 for switching the actuators 11RL and 11RR corresponding to the left rear wheel WRL and the right rear wheel WRR between a connecting position and a disconnecting position is arranged in the right rear-wheel conduit 33. An orifice 32a ensuring a similar flow resistance to that of the orifice included in the rear-wheel connection control valve 29 is disposed in the left rear-wheel conduit 32. In the suspension apparatus 10A of the second embodiment, oil is fed to and discharged from the respective actuators 11i via the main supply conduit 23 from and to the reserve tank 16 in the following manner.

The front-wheel control valve 26, the front-wheel connection control valve 27, the rear-wheel control valve 28, and the rear-wheel connection control valve 29 are two-position selector valves selectively switched between two-way connecting positions 26a through 29a and single-way connecting positions 26b through 29b. The front-wheel control valve 26 and the rear-wheel control valve 28 are kept in the single-way connecting positions 26b and 28b shown in Fig. 4 in the ordinary state and changed to the two-way connecting positions 26a and 28a at the time of adjusting the vehicle height (at the time of raising or lowering the vehicle height). The front-wheel connection control valve 27 and the rear-wheel connection control valve 29 are, on the other hand, kept in the two-way connecting positions 27a and 29a shown in Fig. 4 in the ordinary state and changed to the single-way connecting positions 27b and 29b at a turn of the vehicle.

The front-wheel supply conduit 24 is branched off at a diverging point 24a after the front-wheel connection control valve 27 to a left front-wheel conduit 30 connecting with the actuator 11FL for the left front wheel WFL and a right front-wheel conduit 31 connecting with the actuator 11FR for the right front wheel WFR. The rear-wheel supply conduit 25 is branched off at a diverging point 25a before the rear-wheel connection control valve 29 to the left rear-wheel conduit 32 and the right rear-wheel conduit 33. When the front-wheel control valve 26 is switched from the single-way connecting position 26b shown in Fig. 4 to the two-way connecting position 26a, oil flown into the front-wheel supply conduit 24 passes through the front-wheel control valve 26 and the subsequent front-wheel connection control valve 27 and is fed to the actuators 11FL and 11FR via check valves 35 and 36 for raising the vehicle height, which are disposed respectively in the left front-wheel conduit 30 and the right front-wheel conduit 31. When the rear-wheel control valve 28 is switched from the single-way connecting position 28b shown in Fig. 4 to the two-way connecting position 28a, oil flown into the rear-wheel supply conduit 25 passes through the rear-wheel control valve 28 and then flows into the left rear-wheel conduit 32 and the right rear-wheel conduit 33 that are branched off at the diverging point 25a. Oil is supplied to the actuator 11RL via the orifice 32a in the left rear-wheel conduit 32 and supplied to the actuator 11RR via the rear-wheel connection control valve 29 switched to the two-way connecting position 29a. The vehicle height is accordingly raised at the wheels corresponding to the actuators 11i that receive the supply of oil. The front-wheel control valve 26 and the rear-wheel control valve 28 are switched independently, and the vehicle height can thus be increased only at the left and right front wheels, only at the left and right rear wheels, or at all the wheels of the vehicle.

Like the suspension apparatus 10 of the first embodiment, the suspension apparatus 10A of the second embodiment includes a drain pipe 40 and a discharge control valve 41 for opening and closing the drain pipe 40 as a mechanism for discharging oil from the actuators 11i to lower the vehicle height. The suspension apparatus 10A further includes by-passes for the actuators 11FL and 11FR corresponding to the left and right front wheels WFL and WFR as another mechanism for lowering the vehicle height. The suspension apparatus 10A has a left front-wheel by-pass 42 and a check valve 43 for lowering the vehicle height with respect to the actuator 11FL. The left front-wheel by-pass 42 is branched off from the left front-wheel conduit 30 at a diverging point 30a and by- passes the front-wheel connection control valve 27 to reach a diverging point 24b before the front-wheel connection control valve 27. The check valve 43 is disposed in the left front-wheel by-pass 42 to allow an oil flow only from the left front-wheel conduit 30 to the front-wheel supply conduit 24. With respect to the actuator 11FR, the suspension apparatus 10A has a right front-wheel by-pass 44, which is branched off from the right front-wheel conduit 31 at a diverging point 31a and by-passes the front-wheel connection control valve 27 to reach the diverging point 24b before the front-wheel connection control valve 27, and a check valve 45 for lowering the vehicle height, which is disposed in the right front-wheel by-pass 44 to allow an oil flow only from the right front-wheel conduit 31 to the front-wheel supply conduit 24.

The suspension apparatus 10A thus constructed enables oil to be discharged from the actuators 11i, in order to lower the vehicle height in the manner discussed below. The flow relating to the actuator 11FL is described below as an example for the front wheels.

Oil in the actuator 11FL is discharged to the left front-wheel conduit 30 by the internal pressure of the actuator 11FL. The check valve 35 for raising the vehicle height works to prevent the oil flow to the diverging point 24a but enables the oil flow from the diverging point 30a to the left front-wheel by-pass 42. Since the check valve 43 for lowering the vehicle height disposed in the left front-wheel by-pass 42 allows the oil flow only from the left front-wheel by-pass 42 to the diverging point 24b of the front-wheel supply conduit 24, oil discharged from the actuator 11FL by-passes the front-wheel connection control valve 27 and is flown out of the left front-wheel by-pass 42 to the front-wheel supply conduit 24. The front-wheel control valve 26 is at the two-way connecting position 26a in this state as discussed above, and oil is accordingly flown via the front-wheel control valve 26 to the main supply conduit 23. As discussed previously in the first embodiment, the pump 20 is stopped and the discharge control valve 41 opens the drain pipe 40 at the time of lowering the vehicle height. Oil discharged from the actuator 11FL thus passes through the drain pipe 40 and is returned to the reserve tank 16 for recycling. This procedure lowers the vehicle height at the left front wheel WFL. This procedure is also applied to the right front wheel WFR.

On the other hand, oil is discharged from the actuators 11RL and 11RR to the left rear-wheel conduit 32 and the right rear-wheel conduit 33 and flown into the rear-wheel supply conduit 25 after the orifice 32a and the rear-wheel connection control valve 29. The oil then passes through the main supply conduit 23 and the drain pipe 40 and is eventually returned to the reserve tank 16 for recycling. This procedure lowers the vehicle height at the left rear wheel WRL and the right rear wheel WRR.

The vehicle height is maintained by switching the front-wheel control valve 26 and the rear-wheel control valve 28 to the single-way connecting positions 26b and 28b as discussed previously. In this state, the motor 18 is at a stop.

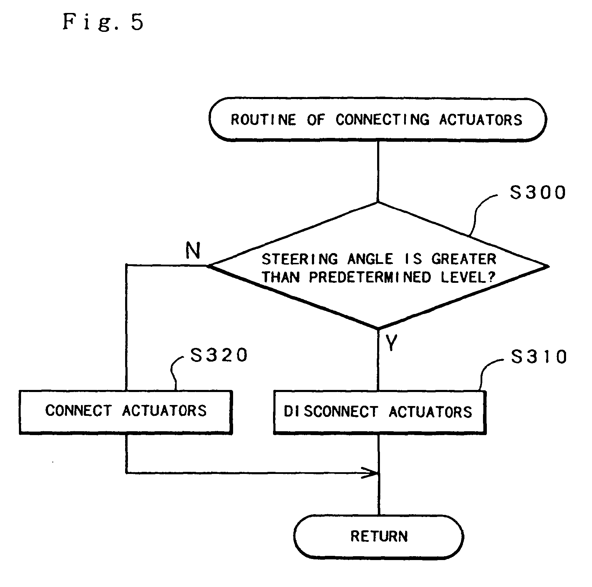

The suspension apparatus 10A of the second embodiment also carries out the vehicle height adjustment routine shown in the flowcharts of Figs. 2 and 3. In case that the vehicle is in the state of a turn and it is determined that adjustment of the height is not required at step S105 in the flowchart of Fig. 2, the routine of connecting the actuators shown in the flowchart of Fig. 5 is executed to depress an increase in rolling angle caused by the turn. The actuators connecting routine is also executed repeatedly at predetermined time intervals. The preference in interruption is determined in advance and given to either the vehicle height adjustment routine or the actuators connecting routine.

When the program enters the actuators connecting routine shown in the flowchart of Fig. 5, the ECU 60 first determines whether or not the data of steering angle obtained from the steering angle sensor is equal to or greater than a predetermined value at step S300. The determination of step S300 may alternatively be based on the data of steering angular velocity. When the answer is affirmative at step S300, the program determines that the vehicle is in the state of a large turn or an abrupt turn and proceeds to step S310 to disconnect the actuators 11FL and 11FR for the front wheels from each other and to disconnect the actuators 11RL and 11RR for the rear wheels from each other. In accordance with a concrete procedure, the ECU 60 outputs switching signals to the front-wheel connection control valve 27 and the rear-wheel connection control valve 29 to switch these connection control valves 27 and 29 to the respective single-way connecting positions 27b and 29b. When the front-wheel connection control valve 27 is switched to the single-way connecting position 27b, the oil flow from the actuator 11FL to the actuator 11FR and the reversed oil flow are blocked by the check valves 35 and 36 for raising the vehicle height and the connection control valve 27 at the single-way connecting position 27b. This process results in disconnecting the actuators 11FL and 11FR from each other. The switching operation of the rear-wheel connection control valve 29 to the single-way connecting position 29b blocks the oil flows and thereby disconnects the actuators 11RL and 11RR.

When the answer is negative at step S300, on the contrary, the program proceeds to step S320 to connect the actuators 11FL and 11FR for the front wheels with each other and to connect the actuators 11RL and 11RR for the rear wheels with each other. In accordance with a concrete procedure, the ECU 60 outputs switching signals to the front-wheel connection control valve 27 and the rear-wheel connection control valve 29 to switch these connection control valves 27 and 29 to the respective two-way connecting positions 27a and 29a. When the front-wheel connection control valve 27 is switched to the two-way connecting position 27a, the check valve 43 for lowering the vehicle height, the connection control valve 27 at the two-way connecting position 27a, and the check valve 36 for raising the vehicle height function to connect the left front-wheel conduit 30 successively to the left front-wheel by-pass 42, the front-wheel supply conduit 24, and the right front-wheel conduit 31 and form the oil flow path from the actuator 11FL to the actuator 11FR. The check valve 45 for lowering the vehicle height, the connection control valve 27 at the two-way connecting position 27a, and the check valve 35 for raising the vehicle height, on the other hand, function to connect the right front-wheel conduit 31 successively to the right front-wheel by-pass 44, the front-wheel supply conduit 24, and the left front-wheel conduit 30 and form the oil flow path from the actuator 11FR to the actuator 11FL. This process results in mutually connecting the actuators 11FL and 11FR with each other. The left rear-wheel conduit 32 and the right rear-wheel conduit 33 are connected to each other in series and mutually connect the actuators 11RL and 11RR for the rear wheels.

This procedure appropriately connects and disconnects the actuators 11FL and 11FR (11RL and 11RR) with each other and from each other, thereby exerting the following effects.

An extreme input of road surface, such as tramping, causes vibrations of the left and right wheels in reversed phases along the vertical axis, and the internal pressures of the actuators for the left and right wheels are significantly varied in an alternating manner. This leads to an excessive increase in pressure in the whole system including these actuators. The actuators for the left and the right wheels in the connecting position enable a working fluid to be fed to the wheels on one side, in order to relieve an increase in internal pressure of the wheels on the other side, thereby depressing the increase in pressure. When the vehicle runs on a rough road surface, such as an undulated road surface, connection of the actuators ensures the sufficient grips of the left and right wheels independently, so as to improve the driving stability. In case that the vehicle runs on a flat road surface after the adjustment of the vehicle height on a rough road surface, connection of the actuators for the left and right wheels enables the internal pressures of the actuators to be substantially equal to each other after the shift to the flat road surface. This effectively prevents the attitude of the vehicle body from being unnaturally inclined. When the actuators for the left and right wheels are in the connecting position at a turn of the vehicle, on the other hand, the rolling angle increases with an increase in steering angle. In this case, the actuators for the left and right wheels are switched to a disconnecting position, in order to depress the increase in rolling angle.

In the suspension apparatus 10A of the second embodiment, the left front-wheel by-pass 42 and the right front-wheel by-pass 44 for by-passing the front-wheel connection control valve 27 are arranged on the side of the front wheels. This structure ensures the following effects when the vehicle height adjustment routine shown in Figs. 2 and 3 is carried out to lower the vehicle height.

In case that oil is discharged from the actuator 11FL corresponding to the left front wheel WFL, the check valve 35 for raising the vehicle height disposed after the front-wheel connection control valve 27 and the check valve 43 for lowering the vehicle height disposed in the left front-wheel by-pass 42 function to enable oil in the actuator 11FL to by-pass the front-wheel connection control valve 27 and flow successively through the left front-wheel by-pass 42, the front-wheel supply conduit 24, and the main supply conduit 23 to be returned to the reserve tank 16 for recycling. Oil discharged from the actuator 11FR corresponding to the right front wheel WFR by-passes the front-wheel connection control valve 27 and flows through the right front-wheel by-pass 44 and the front-wheel supply conduit 24. Oil discharged from the actuators 11RL and 11RR corresponding to the left rear wheel WRL and the right rear wheel WRR, on the other hand, flows into the rear-wheel supply conduit 25 via the orifice 32a and the rear-wheel connection control valve 29, passes through the main supply conduit 23, and is returned to the reserve tank 16 for recycling.

While the oil flow from the actuators 11FL and 11FR corresponding to the left front wheel WFL and the right front wheel WFR by-passes the front-wheel connection control valve 27, the oil flow from the actuators 11RL and 11RR corresponding to the left rear wheel WRL and the right rear wheel WRR passes through the orifice 32a and the rear-wheel connection control valve 29. The structure that the oil flow from the actuators 11FL and 11FR by-passes the front-wheel connection control valve 27 effectively reduces the pressure loss due to the flow through the front-wheel connection control valve 27 and enhances the flow rate of oil discharge. The suspension apparatus 10A of the second embodiment improves the flow rate of oil discharged from the actuators 11i for the left and the right front wheels, thereby making the descending rate of the vehicle height at the front wheels higher than that at the rear wheels.

When the decrease in vehicle height is carried out simultaneously at the front wheels and at the rear wheels or when the decrease in vehicle height at the rear wheels is delayed or temporarily interrupted, this structure ensures a greater rate of oil discharge at the front wheels and thereby enables the vehicle height at the front wheels to decrease at a higher rate than the vehicle height at the rear wheels. This effectively prevents the vehicle height at the front wheels from being higher than the vehicle height at the rear wheels in the course of lowering the vehicle height. The structure of the suspension apparatus 10A of the second embodiment prevents the head lamps from turning upward and blinding the driver in a vehicle running in the opposite direction in the course of lowering the vehicle height. This structure also improves the descending rate of the vehicle height at the front wheels and thereby shortens the time period required for completing the decrease in vehicle height.

In the suspension apparatus 10A of the second embodiment, oil discharged from the actuators 11i for the left and right front wheels flows through the check valves 43 and 45 for lowering the vehicle height. Unlike the orifice, the check valve is not required to narrow the diameter of the oil flow path and thereby does not cause any significant pressure loss in the course of oil flow. The flow rate of oil passing through the check valves 43 and 45 for lowering the vehicle height is thus substantially equal to that through the front-wheel connection control valve 27.

The present invention is not restricted to the above embodiments, but there may be many modifications, changes, and alterations without departing from the scope or spirit of the main characteristics of the present invention. By way of example, the front-wheel control valves 26 and 126 and the rear-wheel control valves 28 and 128 may be switched between the two-way connecting position and a disconnecting position at which the flow path is completely blocked. The front-wheel connection control valve 27 and the rear-wheel connection control valve 29 may also have this alternative structure.

In the suspension apparatus 10 of the first embodiment, the left front-wheel conduit 30 and the right front-wheel conduit 31 have the greater effective diameters than those of the left rear-wheel conduit 2 and the right rear-wheel conduit 33, so that the flow resistance at the front wheels is smaller than that at the rear wheels. For the same purpose, the effective diameters of the orifices included in the front-wheel control valves 26 and 126 may be set greater than those in the orifices included in the rear-wheel control valves 28 and 128.

It should be clearly understood that the above embodiments are only illustrative and not restrictive in any sense. The scope of the present invention are limited only by the terms of the appended claims.

In the process of lowering the vehicle height, oil discharged from actuators 11FL and 11FR corresponding to left and right front wheels flows through a left front-wheel conduit 30 and a right front-wheel conduit 31, whereas oil discharged from actuators 11RL and 11RR corresponding to left and right rear wheels flows through a left rear-wheel conduit 32 and a right rear-wheel conduit 33. The left front-wheel conduit 30 and the right front-wheel conduit 31 have greater effective diameters than those of the left rear-wheel conduit 32 and the right rear-wheel conduit 33. The flow resistance in the left front-wheel conduit 30 and the right front-wheel conduit 31 is accordingly smaller than that in the left rear-wheel conduit 32 and the right rear-wheel conduit 33. This means that oil is discharged from the actuators 11FL and 11FR corresponding to the front wheels at a greater rate than that from the actuators 11RL and 11RR corresponding to the rear wheels.

## Claims

1. A suspension apparatus (10) for a vehicle comprising:
actuators (11FL, 11FR, 11RL, 11RR) for respective wheels (FL, FR, RL, RR) interposed between a vehicle body and the respective wheels (FL, FR, RL, RR) for suspending said vehicle body and changing a vehicle height through supply and discharge of a working fluid; and
control means (60) for controlling the supply and discharge of the working fluid to and from said actuators (11FL, 11FR, 11RL, 11RR) for the respective wheels (FL, FR, RL, RR), thereby adjusting the vehicle height,
wherein said control means (60) enables the working fluid to be discharged from said actuators (11FL, 11FR) for left and right front wheels so as to lower a front-wheel vehicle height at said left and right front wheels (FL, FR) at a first descending rate, while enables the working fluid to be discharged from said actuators (11RL, 11RR) for left and right rear wheels so as to lower a rear-wheel vehicle height at said left and right rear wheels (RL, RR) at a second descending rate;
further comprising a first pathway (30, 31) which the working fluid discharged from said actuators (11FL, 11FR) for said left and right front wheels passes through; and
a second pathway (32, 33) which the working fluid discharged from said actuators (11RL, 11RR) for said left and right rear wheels passes through,
**characterized in that**
a portion of said first pathway is formed by a first conduit (30, 31) of a type having a smaller flow resistance than that of a second conduit forming a portion of the second pathway (32, 33), so as to make the first descending rate at said left and right front wheels greater than the second descending rate at said left and right rear wheels.

2. A suspension apparatus (10) in accordance with claim 1,
further comprising
front-wheel working-fluid discharge means (26, 126) for causing the working fluid to be discharged from said actuators (11FL, 11FR) for said left and right front wheels and pass through a front-wheel conduit having a first flow resistance, thereby lowering the front-wheel vehicle height at the first descending rate,
rear-wheel working-fluid discharge means (28, 128) for causing the working fluid to be discharged from said actuators for said left and right rear wheels and pass through a rear-wheel conduit (32, 33) having a second flow resistance, which is greater than the first flow resistance of said front-wheel conduit (30, 31), thereby lowering the rear-wheel vehicle height at the second descending rate.

3. A suspension apparatus (10) in accordance with claim 2, wherein rear-wheel control means (28, 128, 60) starts control of a discharge of the working fluid from the corresponding actuators to lower the vehicle height, substantially simultaneously with control of a discharge of the working fluid from the corresponding actuators by front-wheel control means (26, 126, 60).

4. A suspension apparatus (10) in accordance with claim 2, said suspension apparatus further comprising:
vehicle height comparing means (52i) for comparing the front-wheel vehicle height at said left and right front wheels with the rear-wheel vehicle height at said left and right rear wheels,
wherein said rear-wheel control means (28, 128, 60) comprises delay means for, when the front-wheel vehicle height is higher than the rear-wheel vehicle height, delaying control of a discharge of the working fluid from said actuators to lower the vehicle height until the front-wheel vehicle height becomes lower than the rear-wheel vehicle height.

5. A suspension apparatus (10) in accordance with claim 2, said suspension apparatus further comprising:
vehicle height comparing means (52i, 60) for comparing the front-wheel vehicle height at said left and right front wheels with the rear-wheel vehicle height at said left and right rear wheels,
wherein said rear-wheel control means (28, 128, 60) comprises interruption means for, when the rear-wheel vehicle height that is higher than the front-wheel vehicle height becomes closer to the front-wheel vehicle height to have a difference of not greater than a predetermined value, temporarily stopping control of a discharge of the working fluid from said actuators to lower the vehicle height.

6. A suspension apparatus (10) comprising actuators (11FL, 11FR, 11RL, 11RR) for respective wheels (FL, FR, RL, RR) interposed between a vehicle body and the respective wheels for suspending said vehicle body and changing a vehicle height through supply and discharge of a working fluid, said suspension apparatus controlling the supply and discharge of the working fluid to and from said actuators for the respective wheels, thereby adjusting the vehicle height, said suspension apparatus further comprising:
front-wheel control means (26, 126, 60) for controlling supply and discharge of the working fluid to and from said actuators for left and right front wheels; and
rear-wheel control means (28, 128, 60) for controlling supply and discharge of the working fluid to and from said actuators for left and right rear wheels,
wherein said front-wheel control means (26, 126, 60) comprises
front-wheel discharge means for continuing discharge of the working fluid from said actuators (11FL, 11FR) for said left and right front wheels to lower the vehicle height,
said rear-wheel control means (28, 128, 60) comprising:
rear-wheel discharge means for starting and then continuing discharge of the working fluid from said actuators for said left and right rear wheels to lower the vehicle height, while said front-wheel discharge means continues the discharge of the working fluid from said actuators (11FL, 11FR) for said left and right front wheels,
**characterized by**
vehicle height comparing means (52i, 60) for comparing the front-wheel vehicle height at said left and right front wheels with the rear-wheel vehicle height at said left and right rear wheels,
wherein said rear-wheel control means (28, 128, 60) comprises delay means for, when the vehicle height comparing means (52i, 60) detects the front-wheel vehicle height being higher than the rear-wheel vehicle height, delaying a start of the discharge of the working fluid by said rear-wheel discharge means until the front-wheel vehicle height is detected being lower than the rear-wheel vehicle height by the vehicle height comparing means (52i, 60).

7. A suspension apparatus (10) comprising actuators (11FL, 11FR, 11RL, 11RR) for respective wheels (FL, FR, RL, RR) interposed between a vehicle body and the respective wheels for suspending said vehicle body and changing a vehicle height through supply and discharge of a working fluid, said suspension apparatus controlling the supply and discharge of the working fluid to and from said actuators for the respective wheels, thereby adjusting the vehicle height, said suspension apparatus further comprising:
front-wheel control means (26, 126, 60) for controlling supply and discharge of the working fluid to and from said actuators for left and right front wheels; and
rear-wheel control means (28, 128, 60) for controlling supply and discharge of the working fluid to and from said actuators for left and right rear wheels,
wherein said front-wheel control means (26, 126, 60) comprises
front-wheel discharge means for continuing discharge of the working fluid from said actuators for said left and right front wheels to lower the vehicle height,
said rear-wheel control means (28, 128, 60) comprising:
rear-wheel discharge means for starting and then continuing discharge of the working fluid from said actuators for said left and right rear wheels to lower the vehicle height, while said front-wheel discharge means continues the discharge of the working fluid from said actuators for said left and right front wheels,
**characterized by**
vehicle height comparing means (52i, 60) for comparing the front-wheel vehicle height at said left and right front wheels with the rear-wheel vehicle height at said left and right rear wheels,
wherein said rear-wheel control means (28, 128, 60) comprises interruption means for, when the rear-wheel vehicle height that is detected being higher than the front-wheel vehicle height by said vehicle height comparing means (52i, 60) becomes closer to the front-wheel vehicle height to have a difference of not greater than a predetermined value, temporarily stopping the discharge of the working fluid by said rear-wheel discharge means.

8. A suspension apparatus (10) in accordance with claim 6 or 7, wherein a front-wheel conduit (30, 31), which said front-wheel discharge means enables the working fluid discharged from said actuators (11FL, 11FR) for said left and right front wheels (FL, FR) to pass through, has a first flow resistance, and a rear-wheel conduit (32, 33), which said rear-wheel discharge means enables the working fluid discharged from said actuators (11RL, 11RR) for said left and right rear wheels (RL, RR) to pass through, has a second flow resistance that is greater than the first flow resistance.

9. A suspension apparatus (10) according to any one of claims 1 to 5,
wherein said control means for controlling the supply and the discharge of the working fluid to and from said actuators (11FL, 11FR, 11RL, 11RR) for the respective wheels (FL, FR, RL, RR) comprise a front-wheel control valve (26, 126) and a rear-wheel control valve (28, 128), further comprising
a front-wheel connection control valve (14FL, 14FR) disposed in a flow path between said front-wheel control valve (26, 126) and said actuators (11FL, 11FR) for said left and right front wheels, said front-wheel connection control valve switching said actuators for said left and right front wheels between a connecting position and a disconnecting position;
a rear-wheel connection control valve (14RL, 14RR) disposed in a flow path between said rear-wheel control valve (28, 128) and said actuators (11RL, 11RR) for said left and right rear wheels, said rear-wheel connection control valve switching said actuators for said left and right rear wheels between a connecting position and a disconnecting position; and
by-pass means for by-passing said front-wheel connection control valve and leading the working fluid to said front-wheel control valve only when the working fluid is discharged from said actuators for said left and right front wheels.

10. A method of controlling a suspension apparatus (10), which comprises actuators (11FL, 11FR, 11RL, 11RR) interposed between a vehicle body and respective wheels (FL, FR, RL, RR) for suspending said vehicle body and changing a vehicle height through supply and discharge of a working fluid and thereby adjusts the vehicle height, said method comprising the steps of:
enabling the working fluid to be discharged from said actuators (11FL, 11FR) for left and right front wheels by passing the working fluid through a first pathway (30, 31), in order to lower a front-wheel vehicle height at said left and right front wheels (FL, FR) at a first descending rate; and
enabling the working fluid to be discharged from said actuators (11RL, 11RR) for left and right rear wheels (RL, RR) by passing the working fluid through a second pathway (32, 33), so as to lower a rear-wheel vehicle height at said left and right rear wheels (RL, RR) at a second descending rate,
**characterized in that**
a portion of said first pathway is formed by a first conduit (30, 31) of a type having a smaller flow resistance than that of a second conduit forming a portion of the second pathway (32, 33), so as to make the first descending rate at said left and right front wheels greater than the second descending rate at said left and right rear wheels.

## Patentansprüche

1. Aufhängungsgerät (10) für ein Fahrzeug, wobei das Gerät Folgendes aufweist:
Stellglieder (11FL, 11FR, 11RL, 11RR) für jeweilige Räder (FL, FR, RL, RR), die zwischen einem Fahrzeugkörper und den jeweiligen Rädern (FL, FR, RL, RR) angeordnet sind, zur Aufhängung des Fahrzeugkörpers und zum Verändern einer Fahrzeughöhe durch Zufuhr und Abgabe eines Arbeitsfluids; und
eine Steuereinrichtung (60) zum Steuern der Zufuhr und Abgabe des Arbeitsfluids zu und von den Stellgliedern (11FL, 11FR, 11RL, 11RR) für die jeweiligen Rädern (FL, FR, RL, RR), wodurch die Fahrzeughöhe eingestellt wird,
wobei die Steuereinrichtung (60) zulässt, dass das Arbeitsfluid von den Stellgliedern (11FL, 11FR) für ein linkes und ein rechts Vorderrad abgegeben wird, so dass eine Vorderradfahrzeughöhe an dem linken und dem rechten Vorderrad (FL, FR) mit einer ersten Absenkgeschwindigkeit vermindert wird, während sie zulässt, dass das Arbeitsfluid von den Stellgliedern (11RL, 11RR) für ein linkes und ein rechtes Hinterrad abgegeben wird, so dass eine Hinterradfahrzeughöhe an dem linken und dem rechten Hinterrad (RL, RR) mit einer zweiten Absenkgeschwindigkeit vermindert wird;
wobei das Aufhängungsgerät weiter einen ersten Durchgang (30, 31), durch den das Arbeitsfluid strömt, das von den Stellgliedern (11FL, 11FR) für das linke und das rechte Vorderrad abgegeben wird; und einen zweiten Durchgang (32, 33) hat, durch den das Arbeitsfluid strömt, das von den Stellgliedern (11RL, 11RR) für das linke und das rechte Hinterrad abgegeben wird,
**dadurch gekennzeichnet, dass**
ein Abschnitt des ersten Durchgangs durch eine erste Leitung (30, 31) einer Bauart ausgebildet ist, welche einen geringeren Strömungswiderstand als der einer zweiten Leitung hat, die einen Abschnitt des zweiten Durchgangs (32, 33) ausbildet, so dass die erste Absenkgeschwindigkeit an dem linken und dem rechten Vorderrad größer als die zweite Absenkgeschwindigkeit an dem linken und dem rechten Hinterrad ist.

2. Aufhängungsgerät (10) nach Anspruch 1, wobei das Gerät weiter Folgendes aufweist:
eine Vorderradarbeitsfluidabgabeeinrichtung (26, 126), die bewirkt, dass das Arbeitsfluid von den Stellgliedern (11FL, 11FR) für das linke und rechte Vorderrad abgegeben wird und durch eine Vorderradleitung strömt, die einen ersten Strömungswiderstand hat, wodurch die Vorderradfahrzeughöhe mit der ersten Absenkgeschwindigkeit vermindert wird, und
eine Hinterradarbeitsfluidabgabeeinrichtung (28, 128), die bewirkt, dass das Arbeitsfluid von den Stellgliedern für das linke und das rechte Hinterrad abgegeben wird und durch eine Hinterradleitung (32, 33) strömt, die einen zweiten Strömungswiderstand hat, der größer als der erste Strömungswiderstand der Vorderradleitung (30, 31) ist, wodurch die Hinterradfahrzeughöhe mit der zweiten Absenkgeschwindigkeit vermindert wird.

3. Aufhängungsgerät (10) nach Anspruch 2, wobei die Hinterradsteuereinrichtung (28, 128, 60) eine Steuerung einer Abgabe des Arbeitsfluids von den entsprechenden Stellgliedern zum Vermindern der Fahrzeughöhe im Wesentlichen gleichzeitig mit einer Steuerung einer Abgabe des Arbeitsfluid von den entsprechenden Stellgliedern durch die Vorderradsteuereinrichtung (26, 126, 60) beginnt.

4. Aufhängungsgerät (10) nach Anspruch 2, wobei das Gerät weiter Folgendes aufweist:
eine Fahrzeughöhenvergleichseinrichtung (52i) zum Vergleichen der Vorderradfahrzeughöhe an dem linken und dem rechten Vorderrad mit der Hinterradfahrzeughöhe an dem linken und dem rechten Hinterrad,
wobei die Hinterradsteuereinrichtung (28, 128, 60) eine Verzögerungseinrichtung zum Verzögern einer Steuerung einer Abgabe des Arbeitsfluids von den Stellgliedern zum Vermindern der Fahrzeughöhe hat, wenn die Vorderradfahrzeughöhe höher als die Hinterradfahrzeughöhe ist, bis die Vorderradfahrzeughöhe niedriger als die Hinterradfahrzeughöhe ist.

5. Aufhängungsgerät (10) nach Anspruch 2, wobei das Gerät weiter Folgendes aufweist:
eine Fahrzeughöhenvergleichseinrichtung (52i, 60) zum Vergleichen der Vorderradfahrzeughöhe an dem linken und dem rechten Vorderrad mit der Hinterradfahrzeughöhe an dem linken und dem rechten Hinterrad,
wobei die Hinterradsteuereinrichtung (28, 128, 60) eine Unterbrechungseinrichtung zum vorübergehenden Anhalten einer Steuerung einer Abgabe des Arbeitsfluids von den Stellgliedern zum Vermindern der Fahrzeughöhe hat, wenn die Hinterradfahrzeughöhe, die höher als die Vorderradfahrzeughöhe ist, sich der Vorderradfahrzeughöhe annähert, so dass eine Differenz nicht größer als ein vorbestimmter Wert ist.

6. Aufhängungsgerät (10) mit Stellgliedern (11FL, 11FR, 11RL, 11RR) für jeweilige Räder (FL, FR, RL, RR), die zwischen einem Fahrzeugkörper und den jeweiligen Rädern (FL, FR, RL, RR) angeordnet sind, zur Aufhängung des Fahrzeugkörpers und zum Verändern einer Fahrzeughöhe durch Zufuhr und Abgabe eines Arbeitsfluids, wobei das Aufhängungsgerät die Zufuhr und Abgabe des Arbeitsfluids zu und von den Stellgliedern (11FL, 11FR, 11RL, 11RR) für die jeweiligen Räder (FL, FR, RL, RR) steuert, wodurch die Fahrzeughöhe eingestellt wird, wobei das Aufhängungsgerät weiter Folgendes aufweist:
eine Vorderradsteuereinrichtung (26, 126, 60) zum Steuern einer Zufuhr und einer Abgabe des Arbeitsfluids zu und von den Stellgliedern für ein linkes und ein rechtes Vorrad; und
eine Hinterradsteuereinrichtung (28, 128, 60) zum Steuern einer Zufuhr und Abgabe des Arbeitsfluids zu und von den Stellgliedern für ein linkes und ein rechtes Hinterrad,
wobei die Vorderradsteuereinrichtung (26, 126, 60) eine Vorderradabgabeeinrichtung zum Fortsetzen einer Abgabe des Arbeitsfluids von den Stellgliedern (11FL, 11FR) für das linke und das rechte Vorderrad zum Vermindern der Fahrzeughöhe hat,
wobei die Hinterradsteuereinrichtung (28, 128, 60) eine Hinterradabgabeeinrichtung zum Beginnen und dann Fortsetzen einer Abgabe des Arbeitsfluids von den Stellgliedern (11RL, 11RR) für das linke und das rechte Hinterrad zum Vermindern der Fahrzeughöhe hat, während die Vorderradabgabeeinrichtung die Abgabe des Arbeitsfluids von den Stellgliedern (11FL, 11FR) für das linke und das rechte Vorderrad fortsetzt,
**gekennzeichnet durch**
eine Fahrzeughöhenvergleichseinrichtung (52i, 60) zum Vergleichen der Vorderradfahrzeughöhe an dem linken und dem rechten Vorderrad mit der Hinterradfahrzeughöhe an dem linken und dem rechten Hinterrad,
wobei die Hinterradsteuereinrichtung (28, 128, 60) eine Verzögerungseinrichtung zum Verzögerung eines Beginns der Abgabe des Arbeitsfluids **durch** die Hinterradabgabeeinrichtung hat, wenn die Fahrzeughöhenvergleichseinrichtung (52i, 60) erfasst, dass die Vorderradfahrzeughöhe höher als die Hinterradfahrzeughöhe ist, bis **durch** die Fahrzeughöhenvergleichseinrichtung (52i, 60) erfasst wird, dass die Vorderradfahrzeughöhe niedriger als die Hinterradfahrzeughöhe ist.

7. Aufhängungsgerät (10) mit Stellgliedern (11FL, 11FR, 11RL, 11RR) für jeweilige Räder (FL, FR, RL, RR), die zwischen einem Fahrzeugkörper und den jeweiligen Rädern (FL, FR, RL, RR) angeordnet sind, zur Aufhängung des Fahrzeugkörpers und zum Verändern einer Fahrzeughöhe durch Zufuhr und Abgabe eines Arbeitsfluids, wobei das Aufhängungsgerät die Zufuhr und Abgabe des Arbeitsfluids zu und von den Stellgliedern (11FL, 11FR, 11RL, 11RR) für die jeweiligen Räder (FL, FR, RL, RR) steuert, wodurch die Fahrzeughöhe eingestellt wird, wobei das Aufhängungsgerät weiter Folgendes aufweist:
eine Vorderradsteuereinrichtung (26, 126, 60) zum Steuern einer Zufuhr und einer Abgabe des Arbeitsfluids zu und von den Stellgliedern für ein linkes und ein rechtes Vorrad; und
eine Hinterradsteuereinrichtung (28, 128, 60) zum Steuern einer Zufuhr und Abgabe des Arbeitsfluids zu und von den Stellgliedern für ein linkes und ein rechtes Hinterrad,
wobei die Vorderradsteuereinrichtung (26, 126, 60) eine Vorderradabgabeeinrichtung zum Fortsetzen einer Abgabe des Arbeitsfluids von den Stellgliedern (11FL, 11FR) für das linke und das rechte Vorderrad zum Vermindern der Fahrzeughöhe hat,
wobei die Hinterradsteuereinrichtung (28, 128, 60) eine Hinterradabgabeeinrichtung zum Beginnen und dann Fortsetzen einer Abgabe des Arbeitsfluids von den Stellgliedern (11RL, 11RR) für das linke und das rechte Hinterrad zum Vermindern der Fahrzeughöhe hat, während die Vorderradabgabeeinrichtung die Abgabe des Arbeitsfluids von den Stellgliedern (11FL, 11FR) für das linke und das rechte Vorderrad fortsetzt,
**gekennzeichnet durch**
eine Fahrzeughöhenvergleichseinrichtung (52i, 60) zum Vergleichen der Vorderradfahrzeughöhe an dem linken und dem rechten Vorderrad mit der Hinterradfahrzeughöhe an dem linken und dem rechten Hinterrad,
wobei die Hinterradsteuereinrichtung (28, 128, 60) eine Unterbrechungseinrichtung zum vorübergehenden Anhalten der Abgabe des Arbeitsfluids **durch** die Hinterradabgabeeinrichtung hat, wenn die Hinterradfahrzeughöhe, die **durch** die Fahrzeughöhenvergleichseinrichtung (52i, 60) erfasst wird, höher ist als die Vorderradfahrzeughöhe, sich der Vorderradfahrzeughöhe annähert, so dass eine Differenz nicht größer als ein bestimmter Wert ist.

8. Aufhängungsgerät (10) nach Anspruch 6 oder 7, wobei eine Vorderradleitung (30, 31), die durch die Vorderradabgabeeinrichtung zulässt, dass das von den Stellgliedern (11FL, 11FR) für das linke und rechte Vorderrad (FL, FR) abgegebene Arbeitsfluid durchströmt, einen ersten Strömungswiderstand hat, und eine Hinterradleitung (32, 33), die durch die Hinterradabgabeeinrichtung zulässt, dass das von den Stellgliedern (11RL, 11RR) für das linke und rechte Hinterrad (RL, RR) abgegebene Arbeitsfluid durchströmt, einen zweiten Strömungswiderstand hat, der größer als der erste Strömungswiderstand ist.

9. Aufhängungsgerät (10) nach einem der Ansprüche 1 bis 5, wobei
die Steuereinrichtung zum Steuern der Zufuhr und der Abgabe des Arbeitsfluids zu und von den Stellgliedern (11FL, 11FR, 11RL, 11RR) für die jeweiligen Räder (FL, FR, RL, RR) ein Vorderradsteuerventil (26, 126) und ein Hinterradsteuerventil (28, 128) hat, und weiter Folgendes aufweist:
ein Vorderradverbindungssteuerventil (14FL, 14FR), das in einem Strömungsdurchgang zwischen dem Vorderradsteuerventil (26, 126) und den Stellgliedern (11FL, 11FR) für das linke und rechte Vorderrad angeordnet ist, wobei das Vorderradverbindungssteuerventil die Stellglieder für das linke und rechte Vorderrad zwischen einer Verbindungsposition und einer Trennposition umschaltet;
ein Hinterradverbindungssteuerventil (14RL, 14RR), das in einem Strömungsdurchgang zwischen dem Hinterradsteuerventil (28, 128) und den Stellgliedern (11RL, 11RR) für das linke und rechte Hinterrad angeordnet ist, wobei das Hinterradverbindungssteuerventil die Stellglieder für das linke und rechte Hinterrad zwischen einer Verbindungsposition und einer Trennposition umschaltet; und
eine Umgehungseinrichtung zum Umgehen des Vorderradverbindungssteuerventils und zum Leiten des Arbeitsfluids zu dem Vorderradsteuerventil nur dann, wenn das Arbeitsfluid von den Stellgliedern für das linke und rechte Vorderrad abgegeben wird.

10. Steuerverfahren eines Aufhängungsgeräts (10), das Stellglieder (11FL, 11FR, 11RL, 11RR), die zwischen einem Fahrzeugkörper und jeweiligen Rädern (FL, FR, RL, RR) angeordnet sind, zur Aufhängung des Fahrzeugkörpers und zum Verändern einer Fahrzeughöhe durch eine Zufuhr und Abgabe eines Arbeitsfluids hat und **dadurch** die Fahrzeughöhe einstellt, wobei das Verfahren die folgenden Schritte aufweist:
Ermöglichen, dass das von den Stellgliedern (11F, 11FR) für ein linkes und rechtes Vorderrad abzugebende Arbeitsfluid durch einen ersten Durchgang (30, 31) strömt, um eine Vorderradfahrzeughöhe an dem linken und rechten Vorderrad (FL, FR) mit einer ersten Absenkgeschwindigkeit zu vermindern; und
Ermöglichen, dass das von den Stellgliedern (11RL, 11RR) für ein linkes und rechtes Hinterrad abzugebende Arbeitsfluid durch einen zweiten Durchgang (32, 33) strömt, um eine Hinterradfahrzeughöhe an dem linken und rechten Hinterrad (RL, RR) mit einer zweiten Absenkgeschwindigkeit zu vermindern,
**dadurch gekennzeichnet, dass**
ein Abschnitt des ersten Durchgangs durch eine erste Leitung (30, 31) einer Bauart ausgebildet ist, die einen geringeren Strömungswiderstand als der einer zweiten Leitung hat, die einen Abschnitt des zweiten Durchgangs (32, 33) ausbildet, so dass die erste Absenkgeschwindigkeit an dem linken und rechten Vorderrad größer als die zweite Absenkgeschwindigkeit an dem linken und rechten Hinterrad ist.

## Revendications

1. Appareil de suspension (10) pour un véhicule comprenant:
des actionneurs (11FL, 11FR, 11RL, 11RR) pour des roues respectives (FL, FR, RL, RR) interposés entre un corps du véhicule et les roues respectives (FL, FR, RL, RR) afin de mettre en suspension ledit corps du véhicule et de modifier une hauteur du véhicule par l'alimentation et le déchargement d'un fluide de travail; et
un moyen de commande (60) pour commander l'alimentation et le déchargement du fluide de travail auxdits et desdits actionneurs (11FL, 11FR, 11RL, 11RR) pour les roues respectives (FL, FR, RL, RR), ajustant par ce moyen la hauteur du véhicule,
où ledit moyen de commande (60) permet le déchargement du fluide de travail desdits actionneurs (11FL, 11FR) pour des roues avant gauche et droite de sorte à réduire une hauteur du véhicule côté roues avant au niveau desdites roues avant gauche et droite (FL, FR) à une première cadence de descente, tout en permettant le déchargement du fluide de travail desdits actionneurs (11RL, 11RR) pour des roues arrière gauche et droite de sorte à réduire une hauteur du véhicule côté roues arrières au niveau desdites roues arrière gauche et droite (RL, RR) à une deuxième cadence de descente;
comprenant en plus une première voie de passage (30, 31) à travers laquelle le fluide de travail déchargé desdits actionneurs (11FL, 11FR) pour lesdites roue avant gauche et droite passe; et
une deuxième voie de passage (32, 33) à travers laquelle le fluide de travail déchargés desdits actionneurs (11RL, 11RR) pour lesdites roues arrière gauche et droite passe,
**caractérisé en ce que**
une partie de ladite première voie de passage est formée par une première conduite (30, 31) d'un type ayant une résistance à l'écoulement inférieure à celle d'une deuxième conduite formant une partie de ladite deuxième voie de passage (32, 33), de sorte à rendre la première cadence de descente au niveau desdites roues avant gauche et droite supérieur à la deuxième cadence de descente au niveau desdites roues arrière gauche et droite.

2. Appareil de suspension (10) selon la revendication 1,
comprenant en plus
un moyen de déchargement de fluide de travail pour roues avant (26, 126) pour amener le fluide de travail à être déchargé desdits actionneurs (11FL, 11FR) pour lesdites roues avant gauche et droite et à passer à travers une conduite pour roues avant ayant une première résistance à l'écoulement, réduisant par ce moyen la hauteur du véhicule côté roues avant avec la première cadence de descente,
un moyen de déchargement de fluide de travail pour roues arrières (28, 128) pour amener le fluide de travail à être déchargé desdits actionneurs pour lesdites roues arrières gauche et droite et à passer à travers une conduite pour roues arrières (32, 33) ayant une deuxième résistance à l'écoulement, qui est supérieure à la première résistance à l'écoulement de ladite conduite pour roues avant (30, 31), réduisant par ce moyen la hauteur du véhicule côté roues arrières avec la deuxième cadence de descente.

3. Appareil de suspension (10) selon la revendication 2, dans lequel un moyen de commande pour roues arrières (28, 128, 60) commence à commander un déchargement du fluide de travail des actionneurs correspondants pour réduire la hauteur du véhicule, essentiellement simultanément avec une commande de déchargement du fluide de travail des actionneurs correspondants par le biais d'un moyen de commande pour roues avant (26, 126, 60).

4. Appareil de suspension (10) selon la revendication 2, ledit appareil de suspension comprenant en plus:
un moyen de comparaison de hauteurs du véhicule (52i) pour comparer la hauteur du véhicule côté roues avant auxdites roues avant gauche et droite à la hauteur du véhicule côté roues arrières auxdites roues arrière gauche et droite,
où ledit moyen de commande pour roues arrières (28, 128, 60) comprend un moyen à retard pour retarder une commande de déchargement du fluide de travail desdits actionneurs, lorsque la hauteur du véhicule côté roues avant est supérieure à la hauteur du véhicule côté roues arrières, afin de réduire la hauteur du véhicule jusqu'à ce que la hauteur du véhicule côté roues avant devienne inférieure à la hauteur du véhicule côté roues arrières.

5. Appareil de suspension (10) selon la revendication 2, ledit appareil de suspension comprenant en plus:
un moyen de comparaison de hauteurs du véhicule (52i, 60) pour comparer la hauteur du véhicule côté roues avant auxdites roues avant gauche et droite à la hauteur du véhicule côté roues arrières auxdites roues arrière gauche et droite,
où ledit moyen de commande pour roues arrières (28, 128, 60) comprend un moyen d'interruption pour arrêter momentanément une commande de déchargement du fluide de travail desdits actionneurs afin de réduire la hauteur du véhicule, lorsque la hauteur du véhicule côté roues arrières qui est supérieure à la hauteur du véhicule côté roues avant devient plus proche de la hauteur du véhicule côté roues avant afin d'avoir une différence qui n'est pas supérieure à une valeur prédéterminée.

6. Appareil de suspension (10) comprenant des actionneurs (11FL, 11FR, 11RL, 11RR) pour des roues respectives (FL, FR, RL, RR) interposés entre un corps du véhicule et les roues respectives pour mettre en suspension ledit corps du véhicule et pour modifier une hauteur du véhicule par l'alimentation et le déchargement d'un fluide de travail, ledit appareil de suspension commandant l'alimentation et le déchargement du fluide de travail auxdits et desdits actionneurs pour les roues respectives, ajustant ainsi la hauteur du véhicule, ledit appareil de suspension comprenant en plus:
un moyen de commande pour roues avant (26, 126, 60) pour commander l'alimentation et le déchargement du fluide de travail auxdits et desdits actionneurs pour des roues avant gauche et droite; et
un moyen de commande pour roues arrières (28, 128, 60) pour commander l'alimentation et le déchargement du fluide de travail auxdits et desdits actionneurs pour les roues arrières gauche et droite,
où ledit moyen de commande pour roues avant (26, 126, 60) comprend
un moyen de déchargement pour roues avant pour poursuivre le déchargement du fluide de travail desdits actionneurs (11FL, 11FR) pour lesdites roues avant gauche et droite afin de réduire la hauteur du véhicule,
ledit moyen de commande pour roues arrières (28, 128, 60) comprenant:
un moyen de déchargement pour roues arrières pour commencer et ensuite poursuivre le déchargement du fluide de travail desdits actionneurs pour lesdites roues arrières gauche et droite afin de réduire la hauteur du véhicule, pendant que ledit moyen de déchargement pour roues avant poursuit le déchargement du fluide de travail desdits actionneurs (11FL, 11FR) pour lesdites roues avant gauche et droite,
**caractérisé en ce que**
un moyen de comparaison de hauteurs du véhicule (52i, 60) pour comparer la hauteur du véhicule côté roues avant auxdites roues avant gauche et droite à la hauteur du véhicule côté roues arrières auxdites roues arrières gauche et droite,
où ledit moyen de commande pour roues arrières (28, 128, 60) comprend un moyen à retard pour retarder un début du déchargement du fluide de travail par ledit moyen de déchargement pour roues arrières jusqu'à ce que la hauteur du véhicule côté roues avant soit détectée comme étant inférieure à la hauteur du véhicule côté roues arrières par le moyen de comparaison de hauteurs du véhicule (52i, 60), lorsque le moyen de comparaison de hauteurs du véhicule (52i, 60) détecte que la hauteur du véhicule côté roues est supérieure à la hauteur du véhicule côté roues arrières.

7. Appareil de suspension (10) comprenant des actionneurs (11FL, 11FR, 11RL, 11RR) pour des roues respectives (FL, FR, RL, RR) interposés entre un corps du véhicule et les roues respectives pour mettre en suspension ledit corps du véhicule et pour modifier une hauteur du véhicule par l'alimentation et le déchargement d'un fluide de travail, ledit appareil de suspension commandant l'alimentation et le déchargement du fluide de travail auxdits et desdits actionneurs pour les roues respectives, ajustant ainsi la hauteur du véhicule, ledit appareil de suspension comprenant en plus:
un moyen de commande pour roues avant (26, 126, 60) pour commander l'alimentation et le déchargement du fluide de travail auxdits et desdits actionneurs pour les roues avant gauche et droite; et
un moyen de commande pour roues arrières (28, 128, 60) pour commander l'alimentation et le déchargement du fluide de travail auxdits et desdits actionneurs pour les roues arrières gauche et droite,
où ledit moyen de commande pour roues avant (26, 126, 60) comprend
un moyen de déchargement pour roues avant pour poursuivre le déchargement du fluide de travail desdits actionneurs pour lesdites roues avant gauche et droite afin de réduire la hauteur du véhicule,
ledit moyen de commande pour roues arrières (28, 128, 60) comprenant:
un moyen de décharge pour roues arrières pour commencer et ensuite poursuivre le déchargement du fluide de travail desdits actionneurs pour lesdites roues arrières gauche et droite afin de diminuer la hauteur du véhicule, pendant que ledit moyen de décharge pour roues avant poursuit le déchargement du fluide de travail desdits actionneurs pour lesdites roues avant gauche et droite,
**caractérisé par**
un moyen de comparaison de hauteurs du véhicule (52i, 60) pour comparer la hauteur du véhicule côté roues avant auxdites roues avant gauche et droite à la hauteur du véhicule côté roues arrières auxdites roues arrières gauche et droite,
où ledit moyen de commande pour roues arrières (28, 128, 60) comprend un moyen d'interruption pour arrêter momentanément le déchargement du fluide de travail par ledit moyen de déchargement pour roues arrières, lorsque la hauteur du véhicule côté roues arrières détectée comme étant supérieure à la hauteur du véhicule côté roues avant par ledit moyen de comparaison de hauteurs du véhicule (52i, 60) devient plus proche de la hauteur du véhicule côté roues avant afin d'avoir une différence qui n'est pas supérieure à une valeur prédéterminée.

8. Appareil de suspension (10) selon la revendication 6 ou 7, dans lequel une conduite côté roues avant (30, 31), à travers laquelle ledit moyen de déchargement pour roues avant permet au fluide de travail déchargé desdits actionneurs (11FL, 11FR) pour lesdites roues avant gauche et droite (FL, FR) de passer, a une première résistance à l'écoulement, et une conduite pour roues arrières (32, 33), à travers laquelle ledit moyen de déchargement pour roues arrières permet au fluide de travail déchargé desdits actionneurs (11RL, 11RR) pour lesdites roues arrières gauche et droite (RL, RR) de passer, a une deuxième résistance à l'écoulement qui est supérieure à la première résistance à l'écoulement.

9. Appareil de suspension (10) selon l'une quelconque des revendications 1 à 5,
dans lequel lesdits moyens de commande pour commander l'alimentation et le déchargement du fluide de travail auxdits et desdits actionneurs (11FL, 11FR, 11RL, 11RR) pour les roues respectives (FL, FR, RL, RR) comprennent une soupape de commande pour roues avant (26, 126) et une soupape de commande pour roues arrières (28, 128), comprenant en plus
une soupape de commande de raccordement pour roues avant (14FL, 14FR) disposée dans un chemin d'écoulement entre ladite soupape de commande pour roues avant (26, 126) et lesdits actionneurs (11FL, 11FR) pour lesdites roues avant gauche et droite, ladite soupape de commande de raccordement pour roues avant commutant lesdits actionneurs pour lesdites roues avant gauche et droite entre une position de raccordement et une position de débranchement;
une soupape de commande de raccordement pour roues arrières (14RL, 14RR) disposée dans un chemin d"écoulement entre ladite soupape de commande pour roues arrières (28, 128) et lesdits actionneurs (11RL, 11RR) pour lesdites roues arrières gauche et droite, ladite soupape de commande de raccordement pour roues arrières commutant lesdits actionneurs pour lesdites roues arrières gauche et droite entre une position de raccordement et une position de débranchement; et
un moyen de contournement pour contourner ladite soupape de commande de raccordement pour roues avant et mener le fluide de travail à ladite soupape de commande pour roues avant uniquement lorsque le fluide de travail est déchargé desdits actionneurs pour lesdites roues avant gauche et droite.

10. Procédé pour commander un appareil de suspension (10), qui comprend des actionneurs (11FL, 11FR, 11RL, 11RR) interposés entre un corps du véhicule et des roues respectives (FL, FR, RL, RR) pour mettre en suspension ledit corps du véhicule et pour modifier une hauteur du véhicule par l'alimentation et le déchargement d'un fluide de travail et ajuster ainsi la hauteur du véhicule, ledit procédé comprenant les étapes consistant à:
permettre au fluide de travail d'être déchargé desdits actionneurs (11FL, 11FR) pour des roues avant gauche et droite en faisant passer le fluide de travail à travers une première voie de passage (30, 31), afin de réduire une hauteur du véhicule côté roues avant auxdites roues avant gauche et droite (FL, FR) à une premier cadence de descente; et
permettre au fluide de travail d'être déchargé desdits actionneurs (11RL, 11 RR) pour des roues arrières gauche et droite (RL, RR) en faisant passer le fluide de travail à travers une deuxième voie de passage (32, 33), de sorte à réduire une hauteur du véhicule côté roues arrières auxdites roues arrières gauche et droite (RL, RR) à une deuxième cadence de descente,
**caractérisé en ce que**
une partie de ladite première voie de passage est formée par une première conduite (30, 31) d'un type ayant une résistance à l'écoulement inférieure à celle d'une deuxième conduite formant une partie de la deuxième voie de passage (32, 33), de sorte à rendre la première cadence de descente auxdites roues avant gauche et droite supérieur à la deuxième cadence de descente auxdites roues arrières gauche et droite.
